# EUROPÄISCHE PATENTANMELDUNG

(11) **EP 4 378 294 A1**
(43) Veröffentlichungstag der Anmeldung: **05.06.2024**
(21) Anmeldenummer: 23401042.9
(22) Anmeldetag: 20.11.2023
(51) Int. Cl.: A01C 7/08, A01C 7/12

(54) **DOPPELDOSIERERMODUL ZUR DOSIERUNG VON SAATGUT**

(30) Priorität: 24.11.2022 DE 102022131089
(71) Anmelder: Amazonen-Werke H. Dreyer SE & Co. KG, 49205 Hasbergen (DE)
(72) Erfinder: Radeke, Jan Philipp, 49205 Hasbergen (DE); Wien, Thomas, 49205 Hasbergen (DE)

(57) **Zusammenfassung**

Die vorliegende Erfindung betrifft Doppeldosierermodul (4) zur Dosierung von Saatgut (S) vor dem Ausbringen auf einer landwirtschaftlichen Nutzfläche (N) mit einem Saatguteintrittsbereich (8), über welchen das Saatgut (S) in das Doppeldosierermodul (4) eintreten kann, mindestens zwei parallel zueinander angeordnete Dosierwalzen (12) mit jeweils mehreren auf deren Drehachsen (A) axial nebeneinander angeordneten Dosierabschnitten (9.2), Dosiereinheiten (11) zur Dosierung des Saatguts (S), die jeweils zwei Saatgutdosierer (9) mit jeweils einem drehbar angetriebenen Dosierabschnitt (9.2) aufweisen, Injektoren (6), über welche das Saatgut (S) zur Erzeugung von Saatgutluftströmen (Ls) aus den Saatgutdosierern (9) in durch die Injektoren (6) geführte Luftströme (L) einbringbar ist, und Abgängen (7), durch welche die Saatgutluftströme (Ls) aus dem Doppeldosierermodul (4) austreten können.

## Beschreibung

Die Erfindung betrifft ein Doppeldosierermodul zur Dosierung von Saatgut vor dem Ausbringen auf einer landwirtschaftlichen Nutzfläche. Einen weiteren Gegenstand der Erfindung bildet eine Maschine zum Ausbringen von Saatgut auf einer landwirtschaftlichen Nutzfläche, mit einem Vorratsbehälter zur Aufnahme des Saatguts, einem mit dem Vorratsbehälter verbundenen Doppeldosierermodul und einer von dem Doppeldosierermodul über Saatgutluftströme mit Saatgut versorgbaren Säeinheit zur Aussaat des Saatguts.

Solche Maschinen zum Ausbringen von Saatgut, beispielsweise Sä- oder Drillmaschinen, weisen in der Regel einen Vorratsbehälter zur Aufnahme des auszubringenden, oftmals körnigen oder granularen Saatguts auf, der zum Transport des Saatguts zur Nutzfläche und/oder zur Bevorratung des Saatguts während der Aussaat häufig nach Art eines großvolumigen, tankartigen Gefäßes ausgeführt ist.

Unter dem Begriff "Saatgut" sollen in diesem Zusammenhang alle in der Landwirtschaft einsetzbaren körnigen oder granularen Materialien zusammengefasst werden, insbesondere auch Dünger usw. Als "Aussaat" soll nachfolgend das Ausbringen sämtlicher derartiger Materialien auf Nutzflächen bezeichnet werden.

Zur Aussaat des Saatguts werden entsprechende Maschinen in der Regel rasterartig über die Nutzfläche gefahren, indem diese beispielsweise von einer landwirtschaftlichen Zugmaschine gezogen werden. Die Maschinen weisen in der Regel zahlreiche Säeinheiten auf, über welche das Saatgut zur Erzeugung einer sich in Fahrtrichtung erstreckenden Saatreihe auf der Nutzfläche ausgebracht wird. Die auszubringende Menge des Saatguts hängt dabei von unterschiedlichen Faktoren, wie beispielsweise der Art und Beschaffenheit des Saatguts, der Beschaffenheit der Nutzfläche oder der Fahrgeschwindigkeit der Maschine, ab.

Zur Anpassung an diese Faktoren weisen solche Maschinen in der Regel zahlreiche zwischen dem Vorratsbehälter und der jeweiligen Säeinheit angeordnete Dosiereinheiten zur Dosierung des Saatguts auf. Die Dosierung des Saatguts in der jeweiligen Dosiereinheit erfolgt in der Regel mittels eines einzelnen Saatgutdosierers, welcher oftmals einen nach Art eines drehbaren Zellenrads ausgebildeten Dosierabschnitt aufweist. Ein solcher Dosierabschnitt weist über dessen Umfang verteilte Dosierkammern zur Mitnahme des aus dem Vorratsbehälter stammenden Saatguts und der dosierten Versorgung der Säeinheit auf, wobei die zu dosierende Menge des Saatguts über die Drehgeschwindigkeit des Dosierabschnitts einstellbar ist. In der Regel sind mehrere Dosierabschnitte auf einer gemeinsamen Drehachse angeordnet und bilden auf diese Art eine Dosierwalze, die über einen Dosierantrieb angetrieben wird.

Die Versorgung der Säeinheiten mit der in den jeweils zugeordneten Dosiereinheiten dosierten Saatgutmenge erfolgt bei solchen Maschinen oftmals über einen Saatgutluftstrom, welcher in sich zwischen den Dosiereinheiten und den Säeinheiten erstreckenden pneumatischen Förderleitungen geführt ist. Zur Erzeugung des Saatgutluftstroms, welcher auch als Partikel-Luftstrom bezeichnet werden kann, wird das in den Dosiereinheiten dosierte Saatgut in einen über ein Gebläse erzeugten Luftstrom eingebracht.

Zur flächigen Aussaat sind bei solchen Maschinen häufig zahlreiche Säeinheiten parallel zueinander angeordnet, mit welchen das Saatgut in zahlreichen, sich in Fahrtrichtung der Maschine parallel zueinander erstreckenden Saatreihen ausgesät werden kann. Jede der Säeinheiten wird dabei über einen eigenen, von der jeweiligen Dosiereinheit zu der entsprechenden Säeinheit verlaufenden Saatgutluftstrom mit Saatgut versorgt.

Hierzu sind die Dosiereinheit nebeneinanderliegend angeordnet, wobei auch die Saatgutdosierer der einzelnen Dosiereinheit derart nebeneinanderliegen, dass ihre Dosierabschnitte eine gemeinschaftliche Dosierwalze der gesamten Dosiereinheit bilden.

Solche Maschinen und Dosiereinheiten haben sich grundsätzlich bewährt. Allerdings nehmen sie aufgrund der nebeneinander erfolgenden Anordnung der zahlreichen Dosiereinheiten viel Bauraum ein. Dies erfordert zudem eine recht lange gemeinschaftliche Dosierwalze der Dosiereinheiten, was einen Austausch der Dosierwalze handhabungstechnisch aufwendig macht, oder die Verwendung einer in mehrere voneinander lösbaren Teile geteilten Dosierwalze, was sich negativ auf die mechanische Stabilität und Beständigkeit der Dosierwalze auswirkt.

Die Aufgabe der vorliegenden Erfindung liegt daher darin, eine im Vergleich zu solchen Dosiereinheiten mit einer gemeinschaftlichen Dosierwalze kompakte Lösung anzugeben und zudem die Austauschbarkeit zu vereinfachen.

Diese Aufgabe wird durch ein Doppeldosierermodul zur Dosierung von Saatgut vor dem Ausbringen auf einer landwirtschaftlichen Nutzfläche **gelöst**, welches einen Saatguteintrittsbereich, über welchen das Saatgut in das Doppeldosierermodul eintreten kann, mindestens zwei parallel zueinander angeordnete Dosierwalzen mit jeweils mehreren auf deren Drehachsen axial nebeneinander angeordneten Dosierabschnitten, Dosiereinheiten zur Dosierung des Saatguts, die jeweils zwei Saatgutdosierer mit jeweils einem drehbar angetriebenen Dosierabschnitt aufweisen, Injektoren, über welche das Saatgut zur Erzeugung von Saatgutluftströmen aus den Saatgutdosierern in durch die Injektoren geführte Luftströme einbringbar ist, und Abgänge, durch welche die Saatgutluftströme aus dem Doppeldosierermodul austreten können, aufweist.

Über den Saatguteintrittsbereich kann das Saatgut auf einfache Weise in das Doppeldosierermodul eintreten, dort dosiert und über die Injektoren in durch diese geführte Luftströme zur Erzeugung von Saatgutluftströmen eingebracht werden, um anschließend als Teil der Saatgutluftströme über Abgänge aus dem Doppeldosierermodul austreten zu können. Da das Doppeldosierermodul mehrere Dosiereinheiten aufweist, welche jeweils zwei Saatgutdosierer mit jeweils einem drehbar angetriebenen Dosierabschnitt aufweisen, kann jede Dosiereinheit auf platzsparende Weise zur Erzeugung von zwei Saatgutluftströmen genutzt werden. Durch die Verwendung von mindestens zwei Dosierwalzen mit mehreren auf deren Drehachsen axial nebeneinander angeordneten Dosierabschnitten, wobei insbesondere jeweils ein Dosierabschnitt der mindestens zwei Walzen einer gemeinsamen Dosiereinheit zugeordnet ist, ist das Doppeldosierermodul zusätzlich kompakter ausgestaltet, so dass kürzere und einfacher auszutauschende Dosierwalzen genutzt werden können.

Das Doppeldosierermodul kann in einen Vorratsbehälter integriert, insbesondere mit diesem einstückig ausgestaltet, sein oder als austauschbare, insbesondere lösbar mit dem Vorratsbehälter verbindbare, Komponente ausgestaltet sein.

Besonders vorteilhaft im Hinblick auf eine zuverlässige und störungsarme Dosierung ist eine Ausgestaltung der Dosierabschnitte als um eine Drehachse drehbar angetriebene Scheiben, insbesondere Rundscheiben. Auf vorteilhafte Weise kann der Saatgutluftstrom und hierüber die Aussaatmenge durch eine Anpassung der Drehgeschwindigkeit der Dosierabschnitte anpassbar sein.

Bei einer vorteilhaften Ausgestaltung sind die zwei Saatgutdosierer spiegelbildlich zur Längsmittelebene der Dosiereinheit verteilt. Auf diese Weise können die Saatgutdosierer platzsparend angeordnet sein. In diesem Zusammenhang kann es vorteilhaft sein, wenn die Dosierabschnitte der beiden Saatgutdosierer zur Erzeugung von in entgegengesetzten Richtungen strömender Saatgutluftströme gegensinnige Drehrichtungen aufweisen.

Vorzugsweise ist den Injektoren jeweils ein Saatgutdosierer zugeordnet. Durch die Zuordnung eines Saatgutdosierers zu den jeweiligen Injektoren kann in jedem Injektor ein Saatgutluftstrom mit einer dosierten Saatgutmenge erzeugt werden. Schwankungen der Saatgutkonzentration im Saatgutluftstrom bei gleichbleibendem Betrieb des Saatgutdosierers, wie sie auftreten können, wenn ein einzelner Saatgutdosierer mehrere Injektoren mit Saatgut versorgt, können vermieden werden.

In vorteilhafter Weise sind injektorseitig der Dosierwalzen, insbesondere austauschbare, Trennbleche zur Trennung der Dosiereinheiten angeordnet. Mit den Trennblechen kann ein Vermischen des dosierten Saatgutmengen, welches durch die Saatgutdosierer aneinander angrenzender Dosiereinheiten dosiert wurden, nach dem Dosieren verhindert werden, insbesondere in sich an die Dosierwalzen in Dosierrichtung anschließenden Injektionsbereichen der Dosiereinheiten. Austauschbare Trennbleche können die Zugänglichkeit des Inneren des Doppeldosierermoduls verbessern und so Tätigkeiten wie das Säubern, Warten oder Austauschen von Komponenten vereinfachen.

Eine weitere Ausgestaltung sieht vor, dass die Abgänge und/oder die Injektoren paarweise aneinander gegenüberliegenden Querseiten angeordnet sind. Indem die Abgänge und/oder die Injektoren eines Paares jeweils auf einander gegenüberliegenden Querseiten des Doppeldosierermoduls angeordnet sind, kann das Doppeldosierermodul noch kompakter ausgestaltet werden.

Bevorzugt weisen entlang der Längsachse des Doppeldosierermoduls nebeneinander liegende Abgänge und/oder Injektoren entlang der Vertikalachse unterschiedliche Abstände zu den Dosierwalzen auf, insbesondere sind sie zickzack-artig angeordnet. Durch die unterschiedlichen Abstände der nebeneinanderliegenden Abgänge und/oder Injektoren, welche zu unterschiedlichen Dosiereinheiten gehören, zu den Dosierwalzen, können diese in unterschiedlichen Höhen entlang der Vertikalachse an den Querseiten des Doppeldosierermoduls angeordnet sein. Die Vertikalachse des Doppeldosierermoduls ist jene Achse, entlang welcher das Saatgut gravitationsbedingt aus einem Vorratsbehälter in den Saatguteintrittsbereich des Doppeldosierermoduls eintritt. Diese Anordnung kann eine näher aneinander erfolgende Anordnung der Dosiereinheiten entlang der Längsachse ermöglichen. Hierdurch kann das Doppeldosierermodul entlang der Längsachse noch kompakter ausgestaltet werden, ohne die Anschließbarkeit von - dem Leiten des Saatgutstroms zu den Säeinheiten dienenden - Förderleitungen an das Doppeldosierermodul durch zu nah beieinanderliegende Abgänge einzuschränken, da diese zueinander höhenversetzt sind. Die an einer Querseite nebeneinanderliegenden Abgänge und/oder Injektoren können alternierend in zwei Abständen zu den Dosierwalzen angeordnet sein, so dass sich eine regelmä-ßige, den Anschluss von Förderleitungen vereinfachende zickzack-artige Anordnung ergibt.

Ferner ist es vorteilhaft, wenn zwei Abgänge je Dosiereinheit entlang der Vertikalachse unterschiedliche Abstände zu den ihnen zugeordneten Dosierabschnitten aufweisen.

Bei einer vorteilhaften Ausgestaltung weist das Doppeldosierermodul eine Luftverteilereinheit zur Verteilung eines einströmenden Zuluftstroms auf die Injektoren auf. Mit einer Luftverteilereinheit kann ein, insbesondere zentral erzeugter, einströmender Zuluftstrom auf einfache Weise auf die einzelnen Injektoren verteilt werden. Auf diese Weise kann in jedem Injektor ein durch diesen geführter Luftstrom bereitgestellt werden, in welchen dosiertes Saatgut zur Erzeugung eines Saatgutluftstroms eingebracht werden kann.

In diesem Zusammenhang hat es sich als vorteilhaft erwiesen, wenn die Luftverteilereinheit einen zentralen Zuluftanschluss aufweist, über welchen der Zuluftstrom in die Luftverteilereinheit einströmen kann. Über den zentralen Zuluftanschluss kann die Luftverteilereinheit auf einfache Weise mit einer den Zuluftstrom erzeugenden Vorrichtung, wie beispielsweise einer Luftstromerzeugung, verbunden werden.

Ferner ist es vorteilhaft, wenn die Luftverteilereinheit eine zentrale Luftverteilerkammer zur Aufnahme des Zuluftstroms und Zuführungen zur Führung einzelner Luftströme zu den Injektoren aufweist. In der Luftverteilerkammer kann der Zuluftstrom in einzelne Luftströme aufgeteilt und über die Zuführungen in die Injektoren geführt werden.

Bei einer vorteilhaften Ausgestaltung weisen die durch die Injektoren, welche einer Dosiereinheit zugeordnet sind, geführten Luftströme einander entgegengesetzte Strömungsrichtungen auf. Durch die entgegengesetzten Strömungsrichtungen kann die Dosiereinheit Saatgutluftströme auf zueinander gegenüberliegenden Seiten erzeugen. Insbesondere können diese Saatgutluftströme auf gegenüberliegenden Querseiten des Doppeldosierermoduls abgegeben werden.

Gemäß einer konstruktiven Ausgestaltung wird vorgeschlagen, dass das Doppeldosierermodul Entnahmeöffnungen zur axialen Entnahme der Dosierwalzen aufweist. Über die Entnahmeöffnungen können die Dosierwalzen auf handhabungstechnisch einfache Weise aus dem Doppeldosierermodul entnommen werden, insbesondere zum Austausch, zur Reinigung und/oder zur Wartung. Die den jeweiligen Dosierwalzen zugeordneten Entnahmeöffnungen können auf einer, insbesondere derselben, sich quer zur Längsachse erstreckenden Stirnseite des Doppeldosierermoduls angeordnet sein.

In vorteilhafter Weise weist das Doppeldosierermodul einen, insbesondere ein Lager für eine Antriebwelle aufweisenden, Verschlussflansch zum Verschließen einer der Entnahmeöffnungen auf. Mit dem Verschlussflansch kann die Entnahmeöffnung verschlossen werden, um das Innere des Doppeldosierermoduls, insbesondere die Dosierwalze, vor Verunreinigungen oder Einwirkungen von außen zu schützen. Durch ein Lager für eine Antriebwelle kann der Verschlussflansch zudem eine Lagerstelle zur Lagerung der Dosierwalze, insbesondere ihrer Antriebswelle, bereitstellen. Bevorzugt ist jeder Entnahmeöffnung ein, insbesondere ein Lager für eine Antriebwelle aufweisender, Verschlussflansch zugeordnet.

In diesem Zusammenhang ist es besonders vorteilhaft, wenn der Verschlussflansch über einen Bajonett-Verschluss an der Entnahmeöffnung befestigbar ist. Über einen Bajonett-Verschluss kann der Verschlussflansch sicher, insbesondere in seiner Position entlang der Drehachse der Dosierwalze, und zugleich lösbar befestigt werden.

In einer vorteilhaften Weiterbildung wird vorgeschlagen, dass das Doppeldosierermodul einen Dosierantrieb zum Antrieb der Dosierabschnitte aufweist. Der Dosierantrieb kann beispielsweise als Elektromotor oder als Hydraulikmotor ausgebildet sein. Insbesondere kann der Dosierantrieb ein zentraler Antrieb zum gemeinschaftlichen Antrieb der Dosierabschnitte von mindestens zwei parallel, d. h. nicht in Reihe, zueinander angeordneten Dosierwalzen sein.

Gemäß einer bevorzugten Ausgestaltung der Erfindung ist der Dosierantrieb parallel zu den Drehachsen der Dosierwalzen, insbesondere parallel zu den Drehachsen der Dosierwalzen und koaxial zur Drehachse einer der Dosierwalzen, ausgerichtet. Ein Antrieb der Dosierwalzen kann bei einer parallelen Ausrichtung des Dosierantriebs parallel versetzt, insbesondere über ein Kettengetriebe oder ein Zahnradgetriebe, erfolgen. Insbesondere der Antrieb einer Dosierwalze mit koaxial zum Dosierantrieb verlaufender Drehachse kann durch eine direkte Kopplung des Dosierantriebs mit der Dosierwalze und/oder einer die Dosierwalze tragenden Antriebswelle erfolgen. Gleichwohl kann auch bei einer koaxialen Ausrichtung des Dosierantriebs zu einer der Drehachsen ein Getriebe zwischen dem Dosierantrieb und der Dosierwalze vorgesehen sein.

In diesem Zusammenhang wird weiter vorgeschlagen, dass jede Dosierwalze einen eigenen Dosierantrieb aufweist oder sich zumindest zwei Dosierwalzen einen gemeinsamen Dosierantrieb teilen. In vorteilhafter Weise erlauben mehrere Dosierantriebe die Abschaltung einzelner Dosierwalzen zur Unterbrechung der Aussaat und/oder die Einstellung der Aussaatmenge einzelner Dosierwalzen durch eine Anpassung der Drehzahl des jeweiligen Dosierantriebs. Eine Anordnung, bei der sich zumindest zwei Dosierwalzen, insbesondere sämtliche Dosierwalzen, einen Dosierantrieb teilen, ermöglicht einen energieeffizienten Betrieb der Dosierwalzen und ist vergleichsweise einfach aufgebaut.

Weiter vorteilhaft ist es, wenn der Dosierantrieb mit den Dosierwalzen, insbesondere mit den Dosierwalzen und einer Rührwelle, über ein Getriebe gekoppelt ist. Indem der Dosierantrieb über ein Getriebe mit den parallel angeordneten Dosierwalzen gekoppelt ist, können diese gemeinschaftlich über den als zentralen Antrieb dienenden Dosierantrieb angetrieben werden. Auf das Vorsehen von einzelnen Antrieben für jede Dosierwalze kann auf komponenten- und kostensparende Weise verzichtet werden. Eine mit dem Dosierantrieb gekoppelte Rührwelle kann über den Dosierantrieb angetrieben werden, so dass das Saatgut im Saatguteintrittsbereich während des Betriebs des Doppeldosierermoduls zur Vermeidung von Verklumpungen vor dem Dosieren durchrührt wird.

Gemäß einer konstruktiven Ausgestaltung sind die Dosierwalzen jeweils über eine ein Zahnrad, insbesondere ein Stirnzahnrad, tragende Antriebswelle mit dem Dosierantrieb gekoppelt. Über die Antriebswelle können die Dosierwalzen auf einfache Weise von dem mit dem Zahnrad gekoppelten Dosierantrieb angetrieben werden. Die Dosierwalzen können unabhängig von ihrer Antriebswelle aus dem Doppeldosierermodul entnehmbar sein.

In Weiterbildung der Erfindung sind die Dosierwalzen mit zueinander umgekehrten Drehsinnen antreibbar. Durch die in zueinander umgekehrten Drehsinnen antreibbare Dosierwalzen, bei welchen die eine Dosierwalze im Uhrzeigersinn und die andere Dosierwalze im Gegenuhrzeigersinn antreibbar ist, kann das Saatgut beim Dosieren von einem in Querrichtung des Doppeldosierermoduls im Wesentlichen mittig angeordneten Saatguteintrittsbereich zu in Querrichtung einander gegenüberliegenden Injektoren befördert werden. Zwischen mindestens einer der Dosierwalzen und dem Dosierantrieb kann ein Getriebe zur Drehrichtungsumkehr angeordnet sein, insbesondere, wenn die beiden parallel zueinander angeordneten Dosierwalzen vom selben Dosierantrieb angetrieben werden. So wird ein im Verhältnis zu der Anzahl der Injektoren bzw. Förderleitungen kompakter Aufbau erreicht, wobei der Vielzahl von Injektoren bzw. Förderleitungen insofern Rechnung getragen wird, dass diese in entgegengesetzte Richtungen abzweigen und so besser verteilt werden können.

Es wird ferner vorgeschlagen, dass der Saatgutdosierer zur Einstellung des Saatgutluftstroms eingerichtet ist. Eine solche Anordnung kann eine zuverlässige Einstellung des Saatgutluftstroms erlauben. Insbesondere kann der Saatgutdosierer zur kontinuierlichen Erzeugung des Saatgutluftstroms ausgebildet sein. In diesem Zusammenhang wird vorgeschlagen, dass der Saatgutdosierer zur dosierten Abgabe des Saatguts in den Luftstrom ausgebildet ist. Ferner hat es sich als vorteilhaft erwiesen, wenn der Saatgutdosierer zur Einstellung des Saatgutluftstroms und der Aussaatmenge unterschiedliche, über den Saatgutdosierer einstellbare Mengen des Saatguts in den Luftstrom abgeben kann.

In diesem Zusammenhang hat es sich als konstruktiv vorteilhaft herausgestellt, wenn die Dosierabschnitte über ihre Umfänge verteilte Dosierkammern aufweisen. Ein derart ausgebildeter Dosierabschnitt kann eine zuverlässige und schonende Mitnahme des aus dem Vorratsbehälter stammenden Saatguts in den Dosierkammern und eine einfache dosierte Abgabe des Saatguts in den Luftstrom erlauben. Die Dosierung des Saatguts kann dabei über die Größe der Dosierkammern und/oder über die Drehgeschwindigkeit der Dosierabschnitte eingestellt werden. In einer konstruktiv vorteilhaften Ausgestaltung der Dosierabschnitte sind die Dosierkammern zwischen sich von dem Umfang des Dosierabschnitts nach radial außen ersteckenden Nocken ausgebildet.

In einer vorteilhaften Weiterbildung wird vorgeschlagen, dass an den Dosierabschnitten der Dosiereinheiten zur Dosierung des Saatguts Dosierlippen anliegen. Die Dosierlippe kann im Zusammenspiel mit den Dosierkammern eine zuverlässige, dosierte Abgabe des Saatguts in den Luftstrom ermöglichen. Die an den Dosierabschnitt einer Dosiereinheit anliegende Dosierlippe kann aus einer übervollen Dosierkammer herausragendes Saatgut zur Dosierung auf einfache Weise abstreifen. Insbesondere kann die Dosierlippe als einseitig federnd gelagertes, laschenartiges Element ausgeführt sein.

In diesem Zusammenhang hat es sich als vorteilhaft erwiesen, wenn die Dosierabschnitte der Dosiereinheiten mit Dosierlippen zusammenwirkende Dosierbereiche aufweisen, über welchen das Saatgut zur Bildung des Saatgutluftstroms aus dem Saatguteintrittsbereich in den durch den Injektor geführten Luftstrom einbringbar ist. Vorteilhaft ist es, wenn die Dosierlippen nach Art von Sperrklinken ausgebildet sind und eine Dosierung nur in einer Drehrichtung der Dosierabschnitte zulassen. Die Dosierlippen können ferner in vorteilhafter Weise dazu ausgebildet sein, ein Einströmen des Luftstroms in den Saatguteintrittsbereich und/oder den Vorratsbehälter zu verhindern.

Eine weitere Ausgestaltung sieht vor, dass mehrere Dosierlippen, welche insbesondere an axial nebeneinander angeordneten Dosierabschnitten einer Dosierwalze anliegen, als ein zusammenhängender, insbesondere geschlitzter, Dosierlippen-Streifen ausgestaltet sind. Mit dem Dosierlippen-Streifen können mehrere Dosierlippen auf konstruktiv einfache Weise von einem baulichen Element bereitgestellt werden. Durch eine geschlitzte Ausgestaltung des Dosierlippen-Streifens, insbesondere mit die Dosierlippen voneinander abgrenzenden und den Dosierlippen-Streifen nicht vollständig entlang ihrer Länge durchtrennenden Schlitzen, können die einzelnen Dosierlippen beweglich zueinander ausgestaltet sein.

Weiter vorteilhaft ist es, wenn die Trennbleche und/oder der Dosierlippen-Streifen lösbar mit einem gemeinsamen, insbesondere lösbaren, Trägerelement verbunden sind. Über das Trägerelement können die Trennbleche und/oder der Dosierlippen-Streifen auf einfache Weise mit den übrigen Komponenten des Doppeldosierermoduls und wahlweise von diesen gelöst werden.

In einer vorteilhaften Weiterbildung der Erfindung wird vorgeschlagen, dass die Maschine mehrere gleichartig aufgebaute Dosiereinheiten aufweist, welche parallel nebeneinander angeordnet sind, insbesondere zur Dosierung unterschiedlicher Saatgutmengen an einer oder mehreren Säeinheiten und/oder einen oder mehrere Säschare. Hierdurch kann eine zuverlässige Versorgung der Säeinheiten und/oder Säschare, insbesondere mit unterschiedlichen Saatgutmengen, erreicht werden.

In vorteilhafter Weise weist das Doppeldosierermodul eine einer der Dosiereinheit zugeordnete, von dem Saatgutluftstrom durchströmbare Saatgutweiche auf, die derart ausgebildet und angeordnet ist, dass ein der Saatgutweiche zugeordneter Abgang in einer Versorgungsstellung der Saatgutweiche mit Saatgut versorgt wird und die Saatgutversorgung des Abgangs in einer Rückführstellung der Saatgutweiche unterbrochen und das Saatgut in einen von dem Saatguteintrittsbereich getrennten Rückführbereich zurückgeführt wird. Die der Dosiereinheit zugeordnete, von dem Saatgutluftstrom durchströmbare Saatgutweiche kann in deren Versorgungsstellung eine Versorgung des jeweiligen der Saatgutweiche zugeordneten Abgangs des Doppeldosierermoduls mit Saatgut und in deren Rückführstellung eine Unterbrechung der Versorgung des jeweiligen Abgangs mit Saatgut bei gleichzeitiger Rückführung des Saatguts in einen von dem Vorratsbehälter getrennten Rückführbereich erlauben. Es kann sich eine mit minimalen Verzögerungen wirksame Absperrung der Säeinheit bei gleichzeitiger Reduzierung von Beschädigungen des Saatguts ergeben.

Vorzugsweise ist jeder der Dosiereinheiten mindestens eine Saatgutweiche zugeordnet.

Gleichwohl kann es vorgesehen sein, dass nicht jede der mehreren gleichartig aufgebauten Dosiereinheiten eine Saatgutweiche aufweist, wodurch der Aufbau der Maschine vereinfacht wird. Hierdurch kann auf vorteilhafte Weise erreicht werden, dass sich an den Dosiereinheiten, welche keine Saatgutweiche aufweisen, die Saatgutversorgung der zugeordneten Säeinheiten und/oder Säschare nicht unterbrechen lässt. Diese Dosiereinheiten können anstelle der Saatgutweiche ein Blindstück aufweisen. Eine Saatgutweiche und damit die Möglichkeit einer Unterbrechung der Aussaat kann insbesondere für diejenigen Dosiereinheiten vorgesehen sein, welche mit denjenigen Säeinheiten zusammenwirken, die zur Schaltung bzw. Erzeugung einer Fahrgasse erforderlich sind.

Eine vorteilhafte Weiterbildung sieht in diesem Zusammenhang eine sich zwischen der Saatgutweiche und einem der Saatgutweiche zugeordneten Abgang des Doppeldosierermoduls erstreckende, von dem Saatgutluftstrom durchströmbare Versorgungsleitung und/oder eine sich zwischen der Saatgutweiche und dem Rückführbereich erstreckende, von dem Saatgutluftstrom durchströmbare Rückführleitung vor. Eine solche Anordnung ermöglicht eine einfache Unterbrechung der Aussaat durch Umschalten der Saatgutweiche zwischen der Versorgungsstellung und der Rückführstellung. In der Versorgungsstellung kann der Saatgutluftstrom durch die sich von der Abströmseite der Saatgutweiche in Richtung der Säeinheit erstreckende Versorgungsleitung strömen, wodurch die Aussaat ermöglicht werden kann. In der Rückführstellung kann der Saatgutluftstrom durch die sich von der Abströmseite der Saatgutweiche in Richtung des Rückführbereichs erstreckende Rückführleitung strömen, wodurch die Aussaat unterbrochen werden kann.

In diesem Zusammenhang hat es sich als vorteilhaft erwiesen, wenn die Rückführleitung in einen Saatgutabscheider zur Abscheidung des Saatguts aus dem Saatgutluftstrom mündet. In dem Saatgutabscheider kann auf vorteilhafte Weise eine Trennung des Saatguts und des Luftstroms erfolgen. Der Saatgutabscheider kann insbesondere nach Art eines Schwerkraftabscheiders ausgebildet sein, wodurch eine besonders zuverlässige, schwerkraftbasierte Trennung des schwereren Saatguts von dem leichteren Luftstrom erfolgen kann. Konstruktiv besonders vorteilhaft ist es in diesem Zusammenhang, wenn der Saatgutabscheider zumindest teilweise den Rückführbereich zur Rückführung des von dem Luftstrom getrennten Saatguts in den Saatguteintrittsbereich bildet.

In einer Weiterbildung der Erfindung wird eine sich zwischen dem Saatgutabscheider und dem der Saatgutweiche zugeordneten Abgang erstreckende Bypassleitung zur Ableitung des von dem Saatgut getrennten Luftstroms vorgeschlagen. Eine solche Bypassleitung ermöglicht eine besonders einfache und gerichtete Ableitung des von dem Saatgut getrennten Luftstroms. Ein Aufstauen des Luftstroms kann durch die Bypassleitung vermieden werden.

Zur besonders einfachen Ableitung des Luftstroms ist es vorteilhaft, wenn sich die Bypassleitung von der Oberseite des Saatgutabscheiders erstreckt. In diesem Zusammenhang hat es sich auch als konstruktiv vorteilhaft erwiesen, wenn die Bypassleitung gekrümmt, insbesondere S-förmig gekrümmt, ausgebildet ist.

Im Zusammenhang mit der Bypassleitung wird vorgeschlagen, dass die Bypassleitung gemeinsam mit der Saatgutweiche derart umschaltbar ist, dass diese in der Versorgungsstellung geschlossen und in der Rückführstellung geöffnet ist. Eine derartige Anordnung ermöglicht in der Versorgungsstellung gute Druckverhältnisse des Luftstroms mit möglichst geringen Druckverlusten. Hierdurch wird ein beständiger, kontinuierlicher Saatgutluftstrom zwischen der Dosiereinheit und der Säeinheit ermöglicht. In der Rückführstellung erlaubt eine derartige Anordnung eine zuverlässige Ableitung des von dem Saatgut getrennten Luftstroms von dem Saatgutabscheider zu dem der Saatgutweiche zugeordneten Abgang. Auch in der Rückführstellung können durch eine solche Anordnung die Druckverluste möglichst geringgehalten werden. Besonders vorteilhaft ist eine Anordnung, bei der sowohl die Bypassleitung als auch die Rückführleitung mit der Saatgutweiche umschaltbar ist.

Es hat sich als vorteilhaft herausgestellt, wenn die Saatgutweiche über einen Aktor zwischen der Versorgungsstellung und der Rückführstellung umschaltbar ist. Hierdurch kann eine zuverlässige Umschaltung zwischen der Versorgungsstellung und der Rückführstellung erreicht werden. Ferner kann ein Aktor zur Reduzierung von Verlusten und Wartezeiten bei der Unterbrechung und/oder dem Wiederbeginn der Aussaat eine schnelle Umschaltung der Saatgutweiche ermöglichen. Konstruktiv vorteilhaft ist es, wenn der Aktor mechanisch, hydraulisch oder elektrisch betätigbar ist. Im Hinblick auf eine einfache Wartung des Aktors hat es sich als vorteilhaft erwiesen, wenn dieser von einer Außenseite der Maschine zugänglich angeordnet ist.

In einer Weiterbildung der Erfindung wird vorgeschlagen, dass die Saatgutweiche als ein einseitig drehgelagertes Schließmittel ausgebildet ist. Eine solche Ausgestaltung ermöglicht eine besonders einfache und schnelle Umschaltung zwischen der Versorgungsstellung und der Rückführstellung. Hierbei ist in der Versorgungsstellung die Rückführleitung geschlossen und die Versorgungsleitung geöffnet. In der Rückführstellung ist die Rückführleitung geöffnet und die Versorgungsleitung geschlossen. Besonders vorteilhaft im Hinblick auf eine zuverlässige Umschaltung ist eine Ausgestaltung des Schließmittels als ein nach Art einer Klappe einseitig drehgelagerter Balken oder Keil. Konstruktiv vorteilhaft ist in diesem Zusammenhang, wenn das dem Drehlager entgegengesetzte Ende des Schließmittels an der Anströmseite der Saatgutweiche angeordnet ist. Es hat sich in diesem Zusammenhang ferner als vorteilhaft erwiesen, wenn die Saatgutweiche als eine einseitig drehbar gelagerte Schwenkeinheit ausgebildet ist. Die Schwenkeinheit kann insbesondere derart ausgebildet sein, dass in deren Versorgungsstellung die Rückführleitung und die Bypassleitung geschlossen sind sowie die Versorgungsleitung geöffnet ist. Demgegenüber sind in der Rückführstellung der Schwenkeinheit die Rückführleitung und die Bypassleitung geöffnet und die Versorgungsleitung geschlossen.

Es hat sich als konstruktiv vorteilhaft erwiesen, wenn einer der Saatgutdosierer an der Anströmseite der Saatgutweiche angeordnet ist. Eine derartige Anordnung ist besonders platzsparend und erlaubt eine effektive Nutzung des Luftstroms zur Saatgutförderung.

In einer konstruktiven Weiterbildung ist jedem Saatgutdosierer der Dosiereinheit eine eigene Saatgutweiche zugeordnet. In vorteilhafter Weise sind die Saatgutdosierer jeweils an der Anströmseite der ihr zugeordneten Saatgutweiche angeordnet.

Weiter wird vorgeschlagen, dass der Dosierabschnitt einen mit einer Rückführlippe zusammenwirkenden Rückführbereich aufweist, über welchen das Saatgut aus dem Saatgutabscheider in den Saatguteintrittsbereich rückführbar ist. Die Rückführlippe kann im Zusammenspiel mit den Dosierkammern eine zuverlässige Rückführung des Saatguts aus dem Rückführbereich, insbesondere aus dem Saatgutabscheider, in den Saatguteintrittsbereich und/oder den Vorratsbehälter ermöglichen. Insbesondere kann die Rückführlippe als einseitig federnd gelagertes, laschenartiges Element ausgeführt sein. Vorteilhaft ist es, wenn die Rückführlippe nach Art einer Sperrklinke ausgebildet ist und eine Rückführung nur in einer Drehrichtung des Dosierabschnitts zulässt. Die Rückführlippe kann ferner in vorteilhafter Weise dazu ausgebildet sein, ein Einströmen des Luftstroms in den Saatguteintrittsbereich und/oder den Vorratsbehälter zu verhindern. Ferner kann die Rückführlippe derart ausgeführt sein, dass ein Eindringen des Saatguts aus dem Saatguteintrittsbereich in den Rückführbereich entgegen der Drehrichtung des Dosierabschnitts verhindert werden kann.

Gemäß einer konstruktiven Ausgestaltung wird vorgeschlagen, dass die Dichtwirkung der Rückführlippe kleiner als die Dichtwirkung der Dichtlippe ist. Auf diese Weise kann insbesondere eine im Vergleich zur Förderwirkung der Dichtlippe größere Förderwirkung der Rückführlippe sichergestellt werden.

In diesem Zusammenhang ist es ferner bevorzugt, wenn die Förderwirkung der Rückführlippe größer als die Förderwirkung der Dichtlippe ist. Hierdurch kann sichergestellt werden, dass der Rückführbereich nicht überläuft, da jederzeit mehr Saatgut über die Rückführlippe aus dem Rückführbereich in den Saatguteintrittsbereich und/oder den Vorratsbehälter zurückgefördert werden kann, als über die Dosierlippe, Saatgutweiche und Rückführleitung in den Rückführbereich hineinströmen kann.

Aus konstruktiver Sicht hat es sich als vorteilhaft erwiesen, wenn der Rückführbereich oberhalb des Dosierbereichs angeordnet ist. Eine derartige Anordnung ermöglicht es, dass der Dosierabschnitt gleichzeitig an mehreren Stellen über seinen Umfang Saatgut fördern kann. Mit ein und demselben Dosierabschnitt kann somit gleichzeitig Saatgut über den Dosierbereich aus dem Saatguteintrittsbereich in den Luftstrom eingebracht werden und in dem Rückführbereich Saatgut in den Saatguteintrittsbereich zurückgeführt werden.

Es ist ferner von konstruktivem Vorteil, wenn der Rückführbereich oberhalb der Drehachse des Dosierabschnitts und der Dosierbereich unterhalb der Drehachse des Dosierabschnitts angeordnet ist. Eine derartige Ausgestaltung ermöglicht sowohl eine zuverlässige Dosierung des Saatguts als auch eine effektive Rückführung des Saatguts.

In einer vorteilhaften Weiterbildung der Erfindung wird vorgeschlagen, dass die Dosiereinheit spiegelbildlich zu deren Längsmittelebene verteilt zwei Saatgutweichen und/oder Saatgutdosierer aufweist. Eine derartige Anordnung ist von Vorteil für eine platzsparende Anordnung der Saatgutdosierer, insbesondere wenn die Saatgutdosierer nahe der Längsmittelebene und die Saatgutweichen weiter entfernt angeordnet sind. In diesem Zusammenhang kann es vorteilhaft sein, wenn die Dosierabschnitt der beiden Saatgutdosierer zur Erzeugung von in entgegengesetzten Richtungen strömenden Saatgutluftströmen gegensinnige Drehrichtungen aufweisen. Ein Doppeldosierermodul mit derartigen Dosiereinheiten kann insbesondere mittig unterhalb eines Auslaufs eines Vorratsbehälters angeordnet sein, was vorteilhaft im Hinblick auf eine gleichmäßige Entleerung des Vorratsbehälters ist.

Bei einer Maschine der eingangs genannten Art wird zur **Lösung** der vorstehend genannten Aufgabe vorgeschlagen, dass das Doppeldosierermodul in der zuvor beschriebenen Weise ausgebildet ist, wodurch sich die im Zusammenhang mit der Vorrichtung beschriebenen Vorteile ergeben.

Eine vorteilhafte Ausgestaltung der Maschine sieht vor, dass diese eine zentrale Luftstromerzeugung zur Erzeugung des Luftstroms aufweist. Die Luftstromerzeugung kann insbesondere getrennt von dem Saatgutstrom angeordnet sein. Die Luftstromerzeugung kann beispielsweise als Gebläse ausgebildet sein. Der in der Luftstromerzeugung erzeugte Luftstrom kann insbesondere derart ausgebildet sein, dass dieser von der Luftstromerzeugung zu dem Dosierbereich des Dosierabschnitts strömen kann, wo das Saatgut zur Bildung des Saatgutluftstroms in den Luftstrom eingebracht werden kann. Anschließend kann der Saatgutluftstrom, insbesondere über die Saatgutweiche, durch die Versorgungsleitung und die Förderleitung zu der Säeinheit oder - in der Rückführstellung der Saatgutweiche - zum Saatgutabscheider zur bedarfsweisen Abscheidung des Saatguts aus dem Luftstrom strömen.

Eine vorteilhafte Weiterbildung sieht in diesem Zusammenhang eine sich zwischen einer Saatgutweiche und der Säeinheit erstreckende, von dem Saatgutluftstrom durchströmbare Versorgungsleitung und/oder eine sich zwischen der Saatgutweiche und dem Rückführbereich erstreckende, von dem Saatgutluftstrom durchströmbare Rückführleitung vor. Eine solche Anordnung ermöglicht eine einfache Unterbrechung der Aussaat durch Umschalten der Saatgutweiche zwischen der Versorgungsstellung und der Rückführstellung. In der Versorgungsstellung kann der Saatgutluftstrom durch die sich von der Abströmseite der Saatgutweiche in Richtung der Säeinheit erstreckende Versorgungsleitung sowie sich an diese anschließende Förderleitung strömen, wodurch die Aussaat ermöglicht werden kann. In der Rückführstellung kann der Saatgutluftstrom durch die sich von der Abströmseite der Saatgutweiche in Richtung des Rückführbereichs erstreckende Rückführleitung strömen, wodurch die Aussaat unterbrochen werden kann.

Darüber hinaus wird vorgeschlagen, dass die Säeinheit einen oder mehrere Säschare zur Ausbringung des Saatguts auf der Nutzfläche aufweist. Ein Säschar kann dabei zur Erzeugung einer Saatreihe ausgebildet sein. Insbesondere kann ein Säschar dabei zur Bildung einer Furche in der Nutzfläche und zur Aussaat bzw. zum Ausbringen des über den in der Förderleitung geführten Saatgutluftstrom transportierten Saatguts ausgebildet sein.

In diesem Zusammenhang ist es von Vorteil, wenn der Säeinheit mindestens eine, insbesondere zwei Förderleitung zur Versorgung mit Saatgut zugeordnet sind. Eine derartige Anordnung ermöglicht eine zuverlässige Versorgung der Säeinheit mit Saatgut.

Im Hinblick auf eine effiziente Aussaat hat es sich als vorteilhaft erwiesen, wenn die Maschine mehrere gleichartig aufgebaute Säeinheiten aufweist, welche zur flächigen Aussaat des Saatguts zueinander parallel angeordnet sind. Hierdurch kann eine zeitsparende Aussaat in mehreren, parallel zueinander verlaufenden Reihen ermöglicht werden.

Weitere Einzelheiten und Vorteile eines erfindungsgemäßen Doppeldosierermoduls sowie einer erfindungsgemäßen Maschine sollen nachfolgend anhand eines in den Figuren schematisch dargestellten Ausführungsbeispiels der Erfindung exemplarisch erläutert werden. Darin zeigt:
- Fig. 1: eine perspektivische Ansicht einer an einer landwirtschaftlichen Zugmaschine angekoppelten, erfindungsgemäßen Maschine,
- Fig. 2: eine perspektivische Ansicht eines Vorratsbehälters, eines Doppeldosierermoduls und einer Luftstromerzeugung der Maschine,
- Fig. 3-6: perspektivische Ansichten des Doppeldosierermoduls,
- Fig. 7: perspektivischer Längsschnitt des Doppeldosierermoduls,
- Fig. 8: Querschnitt des Doppeldosierermoduls und
- Fig. 9-15: weitere perspektivische Ansichten des Doppeldosierermoduls in unterschiedlichen Demontagestufen.

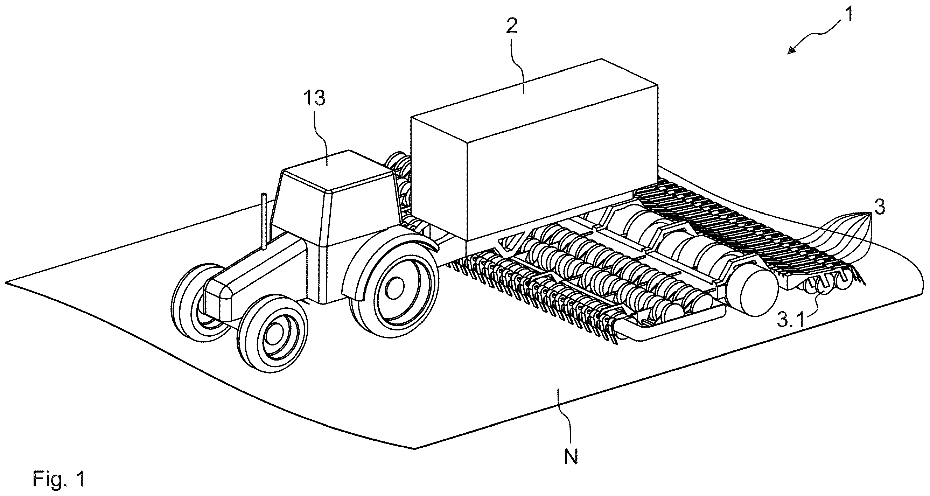

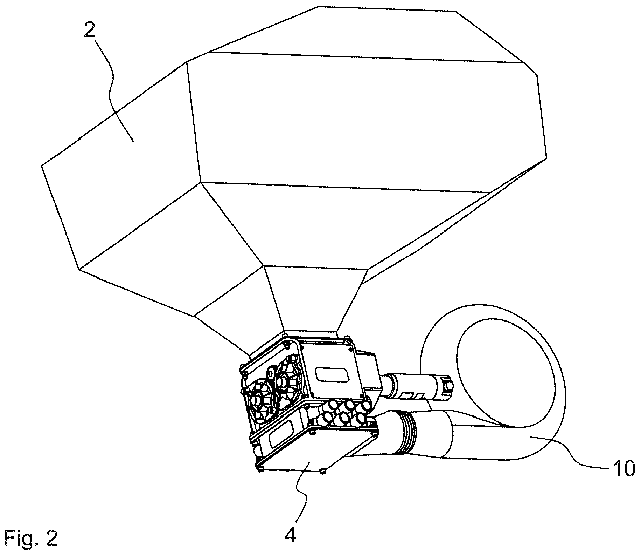

Die Darstellung in Fig. 1 zeigt eine Maschine 1 zum Ausbringen von Saatgut S auf einer landwirtschaftlichen Nutzfläche N, während die Darstellungen in den Fig. 2 bis 15 verschiedene, teils geschnittene oder auch schematische Ansichten eines ein Teil dieser Maschine 1 darstellenden Doppeldosierermoduls 4 zeigen. Bei der in den Figuren dargestellten Maschine 1 handelt es sich um eine Sämaschine, es kann sich jedoch hierbei ebenso um eine andere Maschine 1 zum Ausbringen von Saatgut S oder einem anderen körnigen oder granularen Material auf einer Nutzfläche N handeln.

Zur Aufnahme des Saatguts S weist die Maschine 1 einen in Fig. 2 gezeigte, zentralen Vorratsbehälter 2 auf, welcher als großvolumiges, tankartiges Gefäß ausgebildet ist. Der Vorratsbehälter 2 dient dem Transport des Saatguts S zu der Nutzfläche N und insbesondere auch der Bevorratung des Saatguts S während des Ausbringens bzw. der Aussaat des Saatguts S.

Zum Ausbringen des Saatguts S wird die Maschine 1 von einer landwirtschaftlichen Zugmaschine 13 rasterartig über die Nutzfläche N gezogen, vgl. Fig. 1. Alternativ kann die Maschine 1 aber auch selbstfahrend ausgebildet sein. Die Maschine 1 weist, neben diversen anderen Werkzeugen, Geräten oder Apparaten zur Bodenbearbeitung, zahlreiche, parallel angeordnete Säeinheiten 3 auf, über welche das Saatgut S in parallel verlaufenden Saatreihen flächig auf der Nutzfläche N ausgebracht werden kann. Eine Säeinheit 3 umfasst dabei in der Regel mindestens ein Säschar 3.1 zur Bildung einer Furche in der Nutzfläche N, in welche das aus dem Vorratsbehälter 2 stammende Saatgut S eingebracht wird.

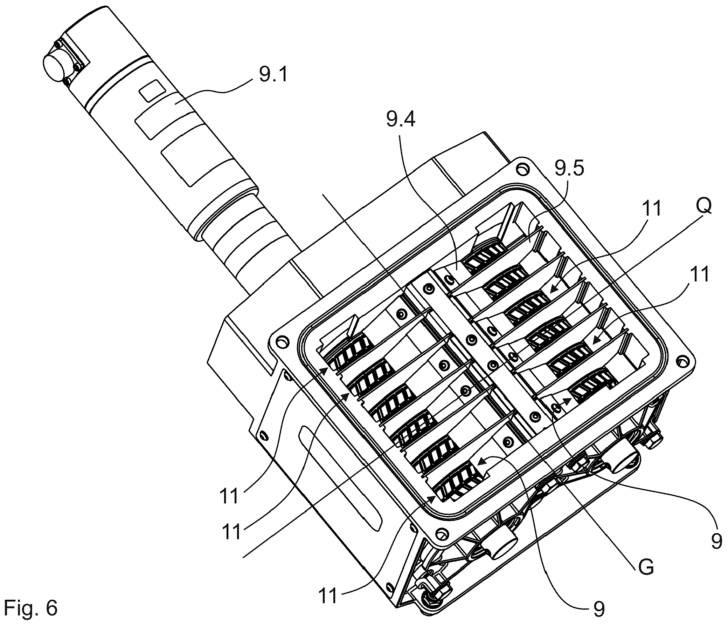

Die von den Säeinheiten 3 auszubringende Menge des Saatguts S hängt von verschiedenen Faktoren ab, wie beispielsweise der Art, Sorte und Beschaffenheit des Saatguts S, dem Zustand der Nutzfläche N oder der Fahrgeschwindigkeit der Maschine 1. Zur Anpassung an diese Faktoren weist das Doppeldosierermoduls 4 mehrere Dosiereinheiten 11 auf, in welchen die auszubringende Menge des Saatguts S dosiert wird. Jeder Säeinheit 3 ist dabei jeweils eine Dosiereinheit 11 zugeordnet, wobei das Doppeldosierermodul 4 und die Dosiereinheiten 11 zwischen dem Vorratsbehälter 2 und den Säeinheiten 3 angeordnet sind. Eine Dosiereinheit 11 des Doppeldosierermoduls 4 versorgt dabei zwei Säeinheit 3. Die Dosiereinheiten 11 weisen jeweils zwei Saatgutdosierer 9 auf, mittels welchen die Dosierung des aus dem Vorratsbehälter 2 stammenden Saatguts S, d. h. die Einstellung der auszubringenden Menge des Saatguts S, erfolgt, vgl. Fig. 6.

Die Versorgung der Säeinheiten 3 mit der in den jeweils zugeordneten Saatgutdosierern 9 dosierten Menge des Saatguts S erfolgt über einen Saatgutluftstrom Ls, welcher hauptsächlich in sich zwischen den Dosiereinheiten 11 und den Säeinheiten 3 erstreckenden, pneumatischen Förderleitungen geführt ist. Der Saatgutluftstrom Ls wird von den Partikeln des Saatgut S und den Luftstrom L gebildet und kann daher auch als Partikel-Luftstrom bezeichnet werden.

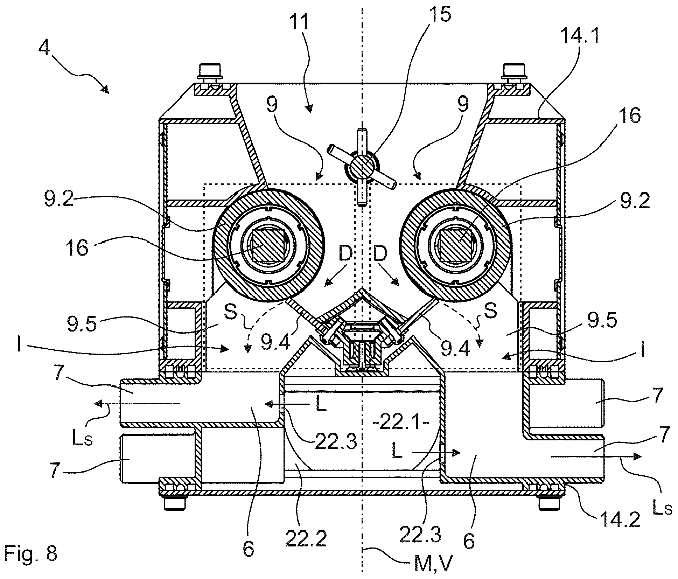

Erzeugt wird der Luftstrom L von einer mit dem Doppeldosierermodul 4 verbundenen Luftstromerzeugung 10, welche beispielsweise als Gebläse ausgeführt sein kann, vgl. Fig. 2. In diesem Luftstrom L wird das in der Dosiereinheit 11 dosierte Saatgut S zur Bildung des Saatgutluftstroms Ls eingebracht (vgl. bspw. Fig. 8), welcher in mehreren pneumatischen Förderleitungen zu den Säeinheiten 3 bzw. Säschare 3.1 gefördert wird. Für die Bildung des Saatgutluftstroms Ls werden Injektoren 6 eingesetzt.

Das Doppeldosierermodul 4 ist sowohl mit dem Vorratsbehälter 2 als auch mit der zu diesem quer angeordneten Luftstromerzeugung 10 verbunden, um das Einbringen der dosierten Menge des Saatguts S in den Luftstrom L zu ermöglichen. Diese Verbindungen sind jeweils lösbar ausgestaltet, so dass das Doppeldosierermodul 4 als ein ganzes Modul von diesen gelöst und aus der Maschine 1 entnommen werden kann.

Zur Erzeugung einer nach der Aussaat im späteren Pflanzenbestand nutzbaren Fahrgasse oder zur Vermeidung einer doppelten Aussaat sind bei der Maschine 1 die Säeinheiten 3 einzeln oder gruppenweise abschaltbar ausgeführt. Die Maschine 1 erlaubt die Absperrung der Säeinheiten 3 mit geringen Verzögerungen bei gleichzeitig geringer Beschädigungsgefahr des Saatguts S.

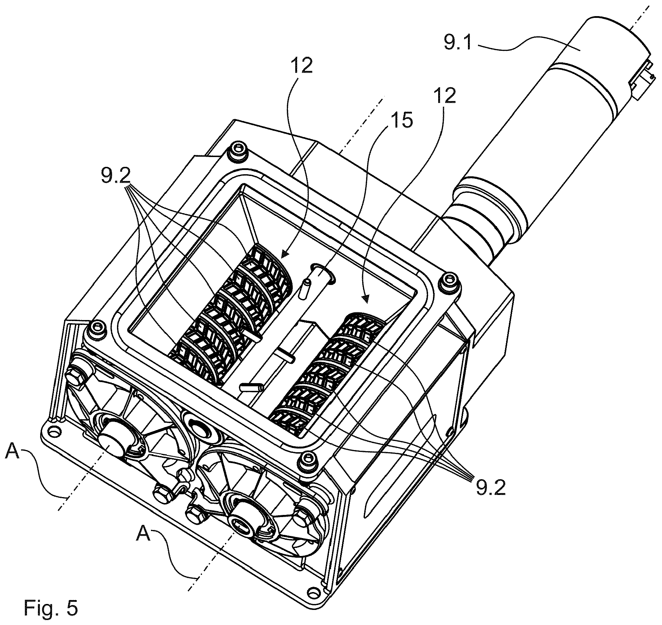

Unterhalb eines trichterförmigen Auslaufs des Vorratsbehälters 2 weist das Doppeldosierermodul 4 mehrere gleichartig aufgebaute Dosiereinheiten 11 zur Dosierung des Saatguts S auf, welche segmentartig nebeneinander angeordnet sind. Gemäß dem in Fig. 5 und Fig. 6 dargestellten Ansichten sind die Dosiereinheiten 11 entlang der Querachse Q parallel zueinander und entlang der Längsachse G nebeneinander angeordnet. Jede der Dosiereinheiten 11 weist zwei Saatgutdosierer 9 auf, welche im Wesentlichen spiegelbildlich zur Längsmittelebene M verteilt angeordnet sind. Ein Saatgutdosierer 9 weist dabei jeweils einen scheibenartigen, drehbaren Dosierabschnitt 9.2 auf. Die Dosierabschnitte 9.2 der beiden Saatgutdosierer 9 sind auf zwei parallel angeordnete und sich parallel zu der Längsmittelebene M erstreckende Dosierwalzen 12 angeordnet, vgl. Fig. 8.

Der Saatgutdosierer 9 umfasst einen scheibenartigen Dosierabschnitt 9.2, welcher über einen Dosierantrieb 9.1 um die Drehachse A drehbar angetrieben ist. Der Dosierabschnitt 9.2 eines der Saatgutdosierer 9 der Dosiereinheit 11 ist im Uhrzeigersinn drehbar, während der Dosierabschnitt 9.2 des anderen Saatgutdosierers 9 der Dosiereinheit 11 im Gegenuhrzeigersinn drehbar ist.

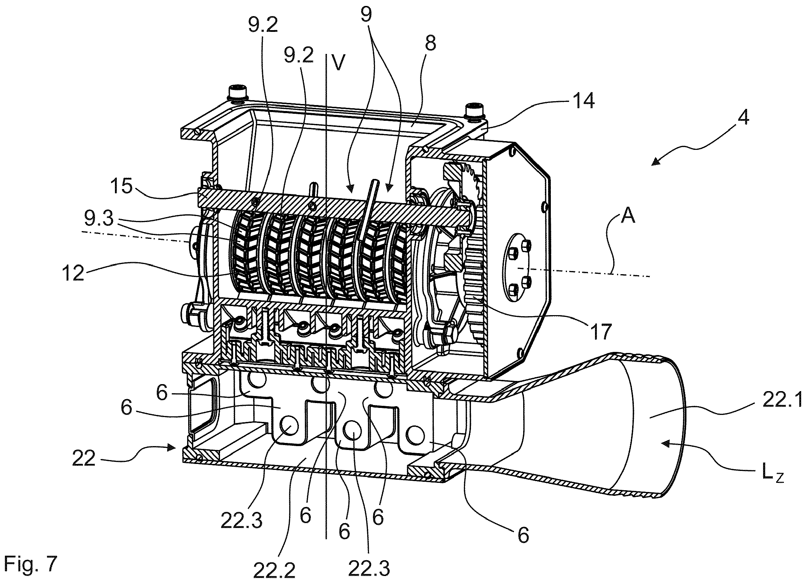

Über seinen Umfang verteilt, weist jeder Dosierabschnitt 9.2 mehrere Dosierkammern 9.3 auf, vgl. Fig. 7. Diese als separate Zellen ausgebildete Dosierkammern 9.3 sind zur portionsweisen Mitnahme des Saatguts S ausgebildet, wobei das Saatgut S im Bereich des trichterförmigen Auslaufs des Vorratsbehälters 2 schwerkraftbasiert in den trichterförmigen Saatguteintrittsbereich 8 des Doppeldosierermoduls 4 und von dort in die Dosierkammern 9.3 strömt. Aufgrund der Drehung des Dosierabschnitts 9.2 um die Drehachse A wird das in den Dosierkammern 9.3 befindliche Saatgut S um den Umfang des Dosierabschnitts 9.2 gefördert. Vom Funktionsprinzip ähnelt der Dosierabschnitt 9.2 einem aus dem Bereich der Fördertechnik bekannten Zellenrad.

Das in den Dosierkammern 9.3 befindliche Saatgut S wird in Richtung eines Dosierbereichs D des jeweiligen Dosierabschnitts 9.2 gefördert, vgl. Fig. 8. Über den Dosierbereich D wird das in den Dosierkammern 9.3 befindliche Saatgut S in den Injektionsbereich I und den durch den Injektionsbereich I geführten Luftstrom L eingebracht. Hierfür weist der Saatgutdosierer 9 im Dosierbereich D eine mit den Dosierkammern 9.3 zusammenwirkende Dosierlippe 9.4 auf. Die Dosierlippe 9.4 ist als einseitig federnd gelagertes, laschenartiges Bauteil ausgeführt, welches in dem Dosierbereich D eine dosierte Entleerung der einzelnen Dosierkammern 9.3 erlaubt. Wie dies anhand der Darstellung in Fig. 8 erkennbar ist, ist die Dosierlippe 9.4 nach Art einer Sperrklinke ausgebildet, welche mit dem Dosierabschnitt 9.2 derart zusammenwirkt, dass die Abgabe des Saatguts S aus den Dosierkammern 9.3 nur in Drehrichtung des Dosierabschnitts 9.2 möglich ist.

Über den Dosierbereich D und die Dosierlippe 9.4 gelangt das Saatgut S portionsweise in den Injektionsbereich I und in den Luftstrom L, welcher in einen Teil des Injektionsbereichs I bildenden Injektor 6 einströmt, wodurch der Saatgutluftstrom Ls gebildet wird. Über die Drehgeschwindigkeit des Dosierabschnitts 9.2 kann eingestellt werden, wie viel Saatgut S in den Luftstrom L eingebracht wird. Die Dosierlippe 9.4 ermöglicht aufgrund ihrer federnden Lagerung auch eine Abdichtung des Saatguteintrittsbereichs 8 und damit indirekt des Vorratsbehälters 2 gegenüber dem Luftstrom L. Der auf diese Weise gebildete Saatgutluftstrom Ls kann anschließend über die pneumatischen Förderleitungen zu einer Säeinheit 3 strömen, wo das Saatgut S ausgesät wird.

Durch die beiden Saatgutdosierer 9 der Dosiereinheit 11 werden zwei Saatgutluftströme Ls je Dosiereinheit 11 gebildet, wobei jeder der Saatgutluftströme Ls über den jeweiligen Abgang 7 des Injektors 6 aus dem Doppeldosierermodul 4 herausgeführt wird und über eine mit dem Abgang 7 verbundene, nicht dargestellte Förderleitung zu der mit deren distalem Ende verbundenen Säeinheit 3 strömt. Dabei sind ebenso Anordnungen denkbar, bei denen sich nicht nur eine, sondern zwei oder mehr Förderleitungen zwischen einem der Dosierbereiche D und einer Säeinheit 3 erstrecken. Über die Säeinheit 3 findet schließlich die Aussaat das Saatguts S statt.

Nach dieser Erläuterung der grundlegenden Funktion des Doppeldosierermoduls 4 und der Maschine 1, soll im Folgenden auf die nähere konstruktive Ausgestaltung des Doppeldosierermoduls 4 eingegangen werden.

Dabei zeigt Fig. 2 neben dem Doppeldosierermodul 4 auch den Vorratsbehälter 2 sowie die als Gebläse ausgestaltete Luftstromerzeugung 10, welche Teile der Maschine 1 sind. Das Doppeldosierermodul 4 ist dabei am unteren Bereich des Vorratsbehälters 2 an diesem lösbar befestigt, so dass das sich im Vorratsbehälter 2 befindliche Saatgut S vom Vorratsbehälter 2 in das Doppeldosierermodul 4 eintreten und in diesem dosiert werden kann. Quer zu der Verbindungsachse zwischen dem Vorratsbehälter 2 und dem Doppeldosierermodul 4 ist das Doppeldosierermodul 4 mit der Luftstromerzeugung 10 verbunden, so dass ein von der Luftstromerzeugung 10 erzeugter Zuluftstrom Lz quer zur Eintrittsrichtung des Saatguts S in das Doppeldosierermodul 4 eintreten kann.

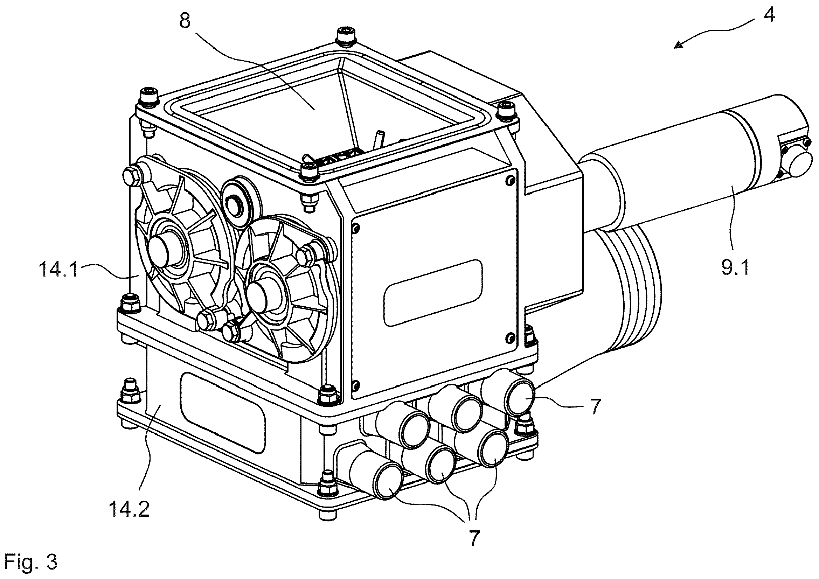

Das von dem Vorratsbehälter 2 und der Luftstromerzeugung 10 gelöste Doppeldosierermodul 4 ist in den perspektivischen Ansichten der Fig. 3 bis Fig. 6 nähergehend gezeigt. Zu erkennen ist dabei der Saatguteintrittsbereich 8, bei welchem das Saatgut S vom Vorratsbehälter 2 aus in das Doppeldosierermodul 4 eintreten kann. Der Saatguteintrittsbereich 8 ist zur nach außen hin dichten Verbindung mit dem Vorratsbehälter 2 von einer Dichtlippe umgeben und kann über die dargestellten Schrauben an dem Vorratsbehälter 2 befestigt werden. Das Gehäuse 14 des Doppeldosierermoduls 4 ist dabei in ein erstes Teilgehäuse 14.1 und ein zweites Teilgehäuse 14.2 unterteilt. Die beiden Teilgehäuse 14.1, 14.2 sind lösbar miteinander verbunden, wodurch ein Zugriff auf das Innere des Doppeldosierermoduls 4 zur Reinigung, Wartung und Instandhaltung auf einfache Weise möglich ist.

Das erste Teilgehäuse 14.1 nimmt u. a. die Dosierwalzen 12 und den Dosierantrieb 9.1 auf und dient in erster Linie zur Dosierung des Saatguts S.

Das zweite Teilgehäuse 14.2 weist die Injektoren 6, über welche das Saatgut S aus den Saatgutdosierern 9 in durch die Injektoren 6 geführte Luftströme L einbringbar ist, sowie die Abgänge 7 auf, durch welche die in den Injektoren 6 erzeugten Saatgutluftströme Ls aus dem Doppeldosierermodul 4 austreten können.

Wie insbesondere in Fig. 3 zu erkennen ist, sind diese Abgänge 7 dabei zickzack-artig angeordnet, so dass der absolute Abstand zwischen zwei benachbarten Abgängen 7 ausreichend groß ist, um auf ihn jeweils eine Förderleitung zu befestigen, über welche das Saatgut S zu den einzelnen Säeinheiten 3 geführt wird. Zugleich lässt sich hierdurch ein entlang der Längsachse G gemessener Abstand zwischen benachbarten Abgängen 7 kleiner dimensionieren als dies der Fall wäre, wenn sämtliche Abgänge 7 auf der gleichen Ebene angeordnet wären, da ihr Abstand dann größer sein müsste, um die Befestigung der Förderleitungen zu ermöglichen.

Wie insbesondere in den das erste Teilgehäuse 14.1 perspektivisch von oben bzw. von unten zeigenden Fig. 5 und Fig. 6 zu erkennen ist, weist das Doppeldosierermodul 4 sechs gleichartig aufgebaute Dosiereinheiten 11 auf, welche parallel zueinander und entlang der Längsachse G nebeneinander angeordnet sind. Zu jeder dieser Dosiereinheiten 11 gehören zwei Saatgutdosierer 9 mit jeweils einem drehbar angetriebenen Dosierabschnitt 9.2. Jeweils ein Dosierabschnitt 9.2 jeder Dosiereinheit 11 ist dabei ein Teil einer der beiden parallel zueinander angeordneten Dosierwalzen 12. Diese Dosierabschnitte 9.2 der Dosierwalzen 12 sind entlang der Drehachse A der jeweiligen Dosierwalzen 12 axial nebeneinander angeordnet.

Injektorseitig dieser Dosierwalzen 12 sind die nebeneinander angeordneten Dosiereinheiten 11 durch Trennbleche 9.5 voneinander getrennt. Die Trennbleche 9.5 verhindern dabei, dass das von einem der Saatgutdosierer 9 einer Dosiereinheit 11 dosierte Saatgut S in einen Injektor 6 gerät, welcher einer der benachbarten Dosiereinheiten 11 zugeordnet ist, statt in jenen Injektor 6 zu gelangen, welcher dem Saatgutdosierer 9 zugeordnet ist.

Neben den an dem Saatguteintrittsbereich 8 angrenzenden Dosierwalzen 12, deren Dosierkammern 9.3 das Saatgut S vom Saatguteintrittsbereich 8 aus aufnehmen können, weist das Doppeldosierermodul 4 in seiner im montierten Zustand in Richtung des Vorratsbehälters 2 weisenden Hälfte eine Rührwelle 15 auf, vgl. Fig. 5. Diese Rührwelle erstreckt sich im Saatguteintrittsbereich 8 parallel zu den Dosierwalzen 12. Die Rührwelle 15 weist sich radial von ihrer Längsachse wegerstreckende Rührfortsätze auf, mit welcher die Rührwelle 15 bei ihrer Drehung das sich im Saatguteintrittsbereich 8 befindliche Saatgut S durchrühren kann. Durch diese Rührbewegung der Rührwelle 15 werden etwaige Verklumpungen und Agglomerationen des Saatguts aufgelöst und ein weiteres Verklumpen verhindert, so dass ein Dosieren des Saatguts S mit den Saatgutdosierern 9 zuverlässig erfolgen kann.

Neben den Teilgehäusen 14.1 und 14.2 zeigen die Fig. 3 bis Fig. 6 auch den am ersten Teilgehäuse 14.1 angeordneten Dosierantrieb 9.1. Über diesen Dosierantrieb 9.1 werden die Dosierabschnitte 9.2 angetrieben, wobei der Dosierantrieb 9.1 als ein gemeinsamer Antrieb beider Dosierwalzen 12 des Doppeldosierermoduls 4 dient. Dieser als Elektromotor ausgestaltete Dosierantrieb 9.1 ist dabei parallel zu den Drehachsen A beider Dosierwalzen 12 ausgerichtet, wobei die Längsachse des Dosierantriebs 9.1 zudem koaxial zur Drehachse A der in Fig. 5 rechten Dosierwalze 12 ausgerichtet ist. Der Dosierantrieb 9.1 ist dabei direkt mit einer Antriebswelle 16 gekoppelt, welche koaxial zur Drehachse A dieser in Fig. 5 auf der rechten Seite dargestellten Dosierwalze 12 verläuft. Über diese Antriebswelle 16 wird die Dosierwalze 12 vom Dosierantrieb 1 in Drehbewegung versetzt, wobei die Antriebswelle 16 in Fig. 5 durch die Dosierwalze 12 verdeckt und nur in Fig. 8, Fig. 14 und Fig. 15 zu erkennen ist.

Wenngleich in den Figuren jeweils ein gerade ausgestalteter Dosierantrieb 9.1 gezeigt ist, kann auch ein abgewinkelter Motor als Dosierantrieb 9.1 genutzt werden, dessen das Drehmoment übertragene Komponente derart parallel zu den Drehachsen A ausgerichtet ist, dass diese Komponente um eine parallel zu den Drehachsen Ader Dosierwalzen 12 verlaufende Achse rotiert.

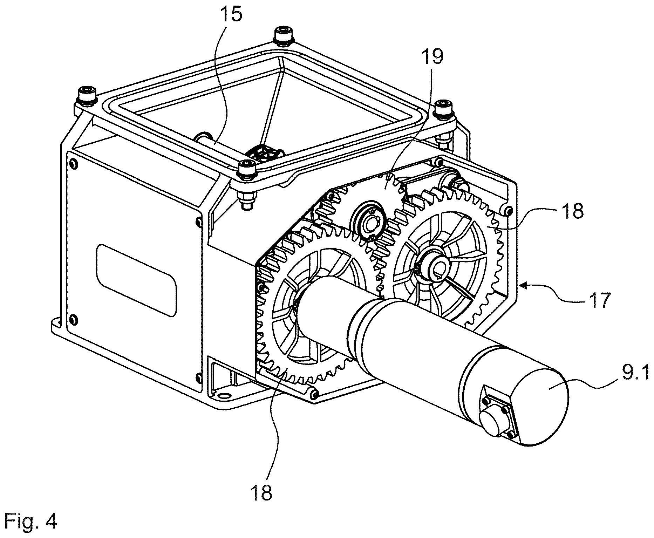

Um beide Dosierwalzen 12 durch den gemeinsamen Dosierantrieb 9.1 anzutreiben, weist das Doppeldosierermodul 4 ein Getriebe 17 auf, vgl. Fig. 4. Über dieses Getriebe 17 ist der Dosierantrieb 9.1 mit den Dosierwalzen 12, insbesondere über deren Antriebswellen 16, gekoppelt. Die Antriebswellen 16 beider Dosierwalzen 12 tragen jeweils ein als Stirnzahnrad ausgestaltetes Zahnrad 18. Diese Zahnräder 18 kämmen derart miteinander, dass das in Fig. 4 rechts dargestellte Zahnrad 18 in Drehung versetzt wird, sobald der Dosierantrieb 9.1 die Antriebswelle 16 antreibt, welche das links dargestellte Zahnrad 18 trägt. Die Drehbewegung des rechten Zahnrads 18 überträgt sich dabei auf die dieses Zahnrad 18 tragende Antriebswelle 16 sowie die entsprechende Dosierwalze 12. Auf diese Weise werden beide Dosierwalzen 12 durch den gemeinsamen Dosierantrieb 9.1 derart angetrieben, dass diese mit einem zueinander umgekehrten Drehsinn rotieren.

Zusätzlich zu den Zahnrädern 18 weist das Getriebe 17 noch mindestens ein weiteres Zahnrad 19 auf, welches mit der Rührwelle 15 gekoppelt ist. Dieses Zahnrad 19 steht mit den Zahnrädern 18 derart in Antriebsverbindung, dass bei einem Antrieb der Dosierwalzen 12 auch die Rührwelle 15 in Rotation versetzt wird. Auf diese Weise dient der Dosierantrieb 9.1 zusätzlich auch zum Antrieb der Rührwelle 15. Durch das Getriebe 17 treibt der Dosierantrieb 9.1 somit zeitgleich beide Dosierwalzen 12 sowie die Rührwelle 15 an.

Anhand der in den Fig. 7 und Fig. 8 gezeigten Querschnitte des Doppeldosierermoduls 4 soll auf das Zusammenwirken der einzelnen Bestandteile zur Dosierung des Saatguts S und Erzeugung der Saatgutluftströme Ls eingegangen werden. Im Längsschnitt entlang der Längsachse G gemäß Fig. 7 ist im oberen Bereich der Saatguteintrittsbereich 8 mit der darin angeordneten Rührwelle 15 sowie eine an den Saatguteintrittsbereich 8 angrenzende Dosierwalze 12 zu erkennen.

Das zum Antrieb der Dosierwalzen 12 und der Rührwelle 15 dienende Getriebe ist in Fig. 7 teilweise dargestellt und im Gegensatz zur Fig. 4 nach au-ßen hin gekapselt. Auf diese Weise wird das Getriebe 17 vor störenden externen Einflüssen, welche beispielsweise zu einem Blockieren der Zahnräder 18, 19 führen könnten, geschützt.

In Fig. 7 ist zudem die Dosierwalze 12 mit hierin sechs nebeneinander liegenden und jeweils einem Saatgutdosierer 9 einer der Dosiereinheiten 11 zugeordneten Dosierabschnitten 9.2 gezeigt. Unterhalb der Dosierabschnitte 9.2 befinden sich im zweiten Teilgehäuse 14.2 die Injektoren 6, wobei jedem der Injektoren 6 jeweils ein Saatgutdosierer 9 und somit auch einer der Dosierabschnitte 9.2 zugeordnet ist. Diese Injektoren 6 sind entlang der Längsachse G des Doppeldosierermoduls 4 nebeneinander liegend angeordnet, weisen entlang der Vertikalachse V des Doppeldosierermoduls 4 jedoch unterschiedliche Abstände zu jener Dosierwalze 12 auf, deren Bestandteil der ihnen zugeordnete Dosierabschnitt 9.1 ist. Durch diese unterschiedlichen Abstände zur Dosierwalze 12 entlang der Vertikalachse V ergibt sich die in den Figuren gezeigte zickzack-artige Anordnung der Injektoren 6.

Neben den Injektoren umfasst das zweite Teilgehäuse 14.2 eine Luftverteilereinheit 22, über welche der von der Luftstromerzeugung 10 erzeugte und in das Doppeldosierermodul 4 einströmende Zuluftstrom Lz auf die Injektoren 6 verteilt wird. Über einen zentralen Zuluftanschluss 22.1 kann der Zuluftstrom Lz in die Luftverteilereinheit 22 einströmen. Die Luftstromerzeugung 10 kann dabei entweder unmittelbar an den Zuluftanschluss 22.1 angeschlossen oder über ein Verbindungsrohr oder einen Verbindungsschlauch mit dem Zuluftanschluss 22.1 verbunden sein.

Über den Zuluftanschluss 22.1 tritt der Zuluftstrom Lz in eine Luftverteilerkammer 22.2 der Luftverteilereinheit 22 ein. Als zentrale Luftverteilerkammer 22.2 des Doppeldosierermoduls 4 dient die Luftverteilerkammer 22.2 nicht nur der Aufteilung des Zuluftstroms Lz und Zuführung einzelner Luftströme L zu den in Fig. 7 gezeigten Injektoren 6, sondern führt einzelne Luftströme L auch den in Fig. 7 nicht gezeigten Injektoren 6 des Doppeldosierermoduls 4 zu. Damit die einzelnen Luftströme L, in welche der Zuluftstrom Lz in der Luftverteilerkammer 22.2 aufgeteilt wird, den jeweiligen Injektoren 6 zugeführt werden kann, erstrecken sich zwischen der Luftverteilerkammer 22.2 und dem Inneren der Injektoren 6 jeweils Zuführungen 22.3. Diese Zuführungen 22.3 sind nach Art von Durchbrüchen in der zur Luftverteilerkammer 22.2 gewandten Rückwand der Injektoren 6 ausgestaltet.

Diese durch die Zuführungen 22.3 in die Injektoren 6 geführten Luftströme L sind insbesondere in dem entlang der Querachse Q erfolgenden Querschnitt des Doppeldosierermoduls 4 gemäß Fig. 8 gezeigt. Dieser Querschnitt entspricht im Wesentlichen einen Schnitt durch eine der mehreren parallelen nebeneinander angeordneten Dosiereinheiten 11.

In Fig. 8 sind dabei die beiden Saatgutdosierer 9 der Dosiereinheit 11 zu erkennen, welche spiegelbildlich zur Längsmittelebene M der Dosiereinheit 11 verteilt angeordnet sind. Jeder der Saatgutdosierer 9 weist dabei einen Dosierabschnitt 9.2 auf, wobei dieser Dosierabschnitt 9.2 jeweils zu einer anderen Dosierwalze 12 gehört. Zu erkennen sind dabei auch die ein viereckigen Querschnitt aufweisenden Antriebswellen 16, welche in den vorhergehenden Figuren jeweils durch die Dosierwalzen 12 verdeckt wurden.

Neben ihrem Dosierabschnitt 9.2 weisen die beiden Saatgutdosierer 9 der Dosiereinheit 11 zudem jeweils eine Dosierlippe 9.4 auf, welche an den Dosierabschnitten 9.2 anliegt. Die Dosierlippe 9.4 liegt dabei im Dosierbereich D des Dosierabschnitts 9.2 an diesem an. In diesem Dosierbereich D des Dosierabschnitts 9.2 erfolgt das Dosieren des Saatguts S, wobei das beim Eintritt der Dosierkammern 9.3 in den Dosierbereich D in diesen aufgenommene und aus diesem ggf. herausragende Saatgut im Dosierbereich D durch die Dosierlippe 9.4 abgestrichen wird. Beim Durchqueren des Dosierbereichs D wird somit sichergestellt, dass die jeweilige Dosierkammer 9.3 des Dosierabschnitts 9.2 nicht überfüllt ist, so dass nach dem Durchqueren des Dosierbereichs D eine Menge Saatgut S vom Saatgutdosierer 9 in den Injektionsbereich I abgegeben wird, welche der vorgegebenen Füllmenge der Dosierkammern 9.3, d. h. einer gestrichenen Dosierkammer 9.3, entspricht.

Über den Injektionsbereich I gelangt das dosierte Saatgut S dann in den Injektor 6, welchem der Saatgutdosierer 9 zugeordnet ist. Damit das dosierte Saatgut S aus dem Injektionsbereich I des jeweiligen Saatgutdosierers 9 nicht in einem in Fig. 8 vor oder hinter dem jeweils geschnitten dargestellten Injektor 6 gelangt, wird der einen Saatgutdosierer 9 zugeordnete Injektionsbereich I quer zur Bildebene durch die Trennbleche 9.5 von Injektionsbereichen I benachbarter Dosiereinheiten 11 getrennt.

Von den in Fig. 8 gezeigten Injektionsbereichen I tritt das durch die Saatgutdosierer 9 der gezeigten Dosiereinheit 11 dosierte Saatgut S gravitationsbedingt in die beiden geschnitten dargestellten Injektoren 6 ein. In den Injektoren 6 vermischt sich das dosierte Saatgut S mit den jeweils durch die Injektoren 6 geführten Luftströmen L, so dass sich die beiden in Fig. 8 gezeigten Saatgutluftströme Ls bilden, welche durch die den jeweiligen Injektoren 6 zugeordneten Abgängen 7 aus dem Doppeldosierermodul 4 herausgeführt werden.

Die Abgänge 7 sind dabei jeweils an den diametral zur Zuführung 22.3 gegenüber gelegenen Ende des Injektors 6 angeordnet. Die beiden der Dosiereinheit 11 zugeordneten Injektoren 6 sind als ein Paar aufeinander gegenüberliegenden Querseiten des Doppeldosierermoduls 4 angeordnet. Auf diese Weise erzeugt die Dosiereinheit 11 zusammen mit den ihr zugeordneten Injektoren 6 zwei Saatgutluftströme Ls, welche auf gegenüberliegenden Seiten aus dem Doppeldosierermodul 4 herausgeführt werden. Denn die Strömungsrichtungen der durch die jeweiligen Injektoren 6 dieses Injektor-Paars geführten Luftströme L sind, wie in Fig. 8 gezeigt, einander entgegengesetzt. Auf diese Weise verlassen die Saatgutluftströme Ls das Doppeldosierermodul 4 jeweils im Wesentlichen entlang einer Richtung, welche sowohl quer zu jener Richtung verläuft, entlang welcher der Zuluftstrom Lz in das Doppeldosierermodul 4 einströmt, als auch quer zu jener Richtung, entlang welcher das noch nicht dosierte Saatgut in den Saatguteintrittsbereich 8 des Doppeldosierermoduls 4 eintritt.

Wie dies weiter in Fig. 8 erkennbar ist, weisen entlang der vertikalen Achse V nicht nur die beiden Injektoren 6, sondern auch die beiden der Dosiereinheit 11 zugeordneten Abgänge 7 unterschiedliche Abstände zu den ihnen zugeordneten Dosierabschnitten 9.2 sowie den entsprechenden Dosierwalzen 12 auf.

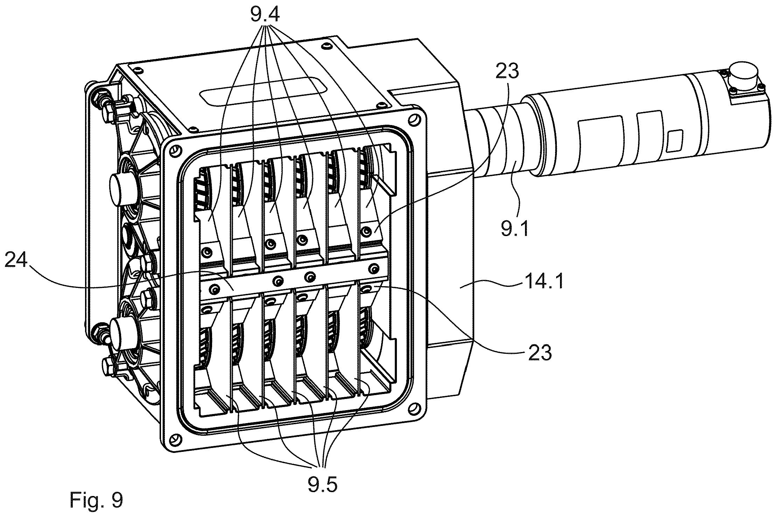

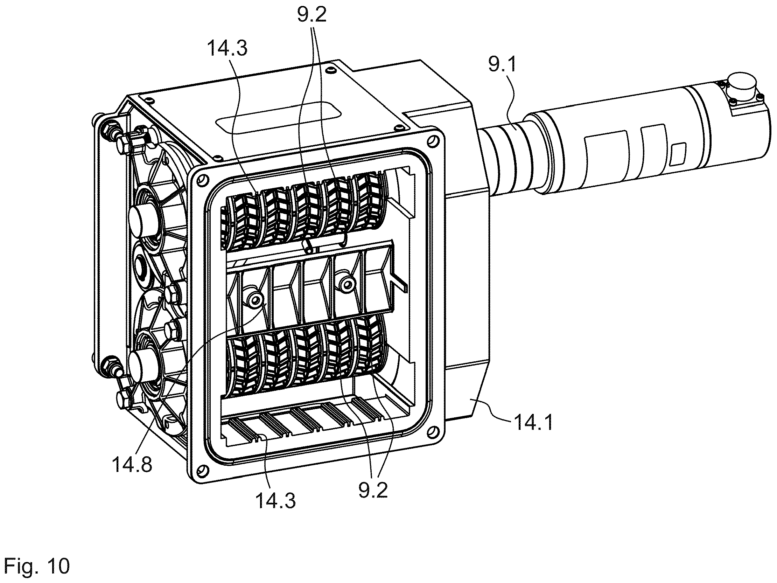

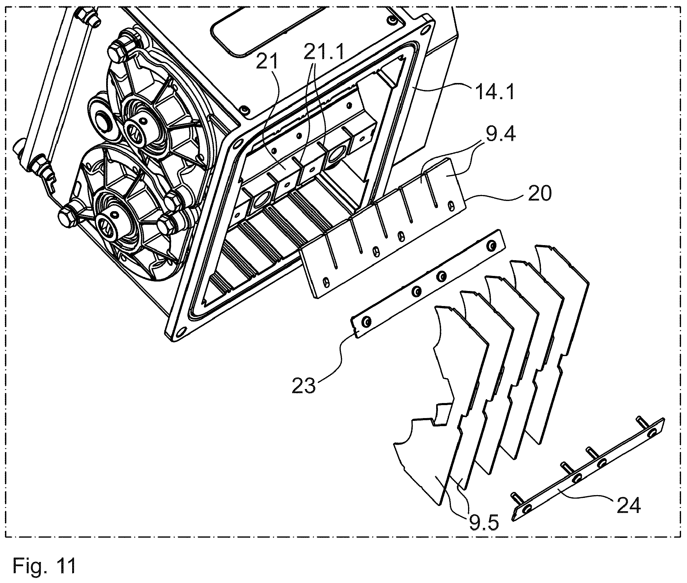

Die Trennung der Dosiereinheiten 11 durch die Trennbleche 9.5 sowie deren Ausgestaltung der Dosierlippen 9.4 sollen anhand der Fig. 9 bis Fig. 11 nähergehend erläutert werden. Dabei zeigt Fig. 9 das erste Teilgehäuse 14.1 aus der Perspektive des zweiten Teilgehäuses 14.2, während Fig. 10 das erste Teilgehäuse 14.1 aus der gleichen Perspektive, jedoch mit entnommenen Dosierlippen 9.4 und Trennblechen 9.5 zeigt, und Fig. 11 eine teilweise Explosionsdarstellung dieser Komponenten zeigt.

Zur erkennen ist dabei, dass die Dosierlippen 9.4 der Saatgutdosierer 9 keine einzelnen Elemente sind, sondern durch einen geschlitzten Dosierlippen-Streifen 20 gebildet werden. Dieser Dosierlippen-Streifen 20 stellt insgesamt sechs Dosierlippen 9.4 bereit, welche im montierten Zustand an entlang der Drehachse A nebeneinander angeordneten Dosierabschnitten 9.2 an einer der Dosierwalzen 12 anliegen. Auf diese Weise stellt der Dosierlippen-Streifen 20 über die Dosiereinheiten 11 hinweg für sämtliche entlang der Längsachse G zueinander in Reihe angeordneten Saatgutdosierern 9 die zu ihnen gehörenden Dosierlippen 9.4 bereit. Durch dieses Zusammenfassen mehrerer Dosierlippen 9.4 zu einem Dosierlippen-Streifen 20 können diese bei Wartungs-, Reinigungs- und Instandhaltungsarbeiten gemeinsam entnommen und ggf. ausgetauscht werden.

Durch die geschlitzte Ausgestaltung des Dosierlippen-Streifens 20 sind die einzelnen Dosierlippen 9.4, welche durch Schlitze zu benachbarten Dosierlippen 9.4 abgegrenzt werden, weiterhin zur Dosierung des Saatguts individuell bewegbar und flexibel. In die Schlitze des Dosierlippen-Streifens 20 können zudem die zwei benachbarten Dosiereinheiten 11 trennenden Trennbleche 9.5 eingreifen.

Sowohl die Trennbleche 9.5 als auch die beiden jeweils einer Dosierwalze 12 zugeordneten Dosierlippen-Streifen 20, von welchen in Fig. 11 nur ein Dosierlippen-Streifen 20 gezeigt ist, sind über ein Trägerelement 21 an dem ersten Teilgehäuse 14.1 befestigbar. Dabei wird der Dosierlippen-Streifen 20 über ein streifenförmiges Befestigungsmittel 23 derart am Trägerelement 21 befestigt, dass die zur Befestigung genutzten Schrauben sowohl das Befestigungsmittel 23 als auch den Dosierlippen-Streifen 20 durchtreten und in das Trägerelement 21 geschraubt werden. Hierüber hinaus wird der Dosierlippen-Streifen 20 durch anziehen der Schrauben zusätzlich zwischen dem Trägerelement 21 und dem Befestigungsmittel 23 verklemmt.

Die Trennbleche 9.5 werden zur Befestigung an dem Gehäuse 14 zunächst ineinander gegenüberliegende Nuten 14.3 des Gehäuses 14 eingeschoben, bis sie zudem in eine Nut 21.1 des Trägerelements 21 eintreten und an dem Trägerelement 21 zum Anliegen kommen. Jedes der Trennbleche 9.5 kann dabei gesondert aus den Nuten 14.3, 21.1 herausgezogen werden, solange die Trennbleche 9.5 nicht durch das gemeinschaftliche und an dem Trägerelement 21 befestigbare Befestigungsmittel 24 gegen ein Herausrutschen gesichert werden.

Das Trägerelement 21 weist einen wesentlichen dachförmigen Querschnitt, insbesondere nach Art eines Mansardenflachdachs mit Fußwalm auf. Auf diese Weise werden die Dosierlippen-Streifen 20 sowohl in einem Winkel zur Vertikalachse V als auch in einem Winkel zur Querachse Q im Inneren des Doppeldosierermoduls 4 angeordnet. Auf diese Weise können die Dosierlippen 9.4 in einem von 90 Grad abweichenden Winkel an den Dosierabschnitten anliegen, wodurch diese effektiver und materialschonender mit den Dosierbereichen D der Dosierabschnitte 9.2 zusammenwirken können.

Das Trägerelement 21 ist wiederum als ein lösbar mit dem Gehäuse 14 verbundenes Element ausgestaltet. Zur Befestigung des Trägerelements 21 weist das erste Teilgehäuse 14.1 einen in Fig. 10 dargestellten Steg 14.8 auf, an welchem das Trägerelement 21 befestigt werden kann, insbesondere über eine Verschraubung.

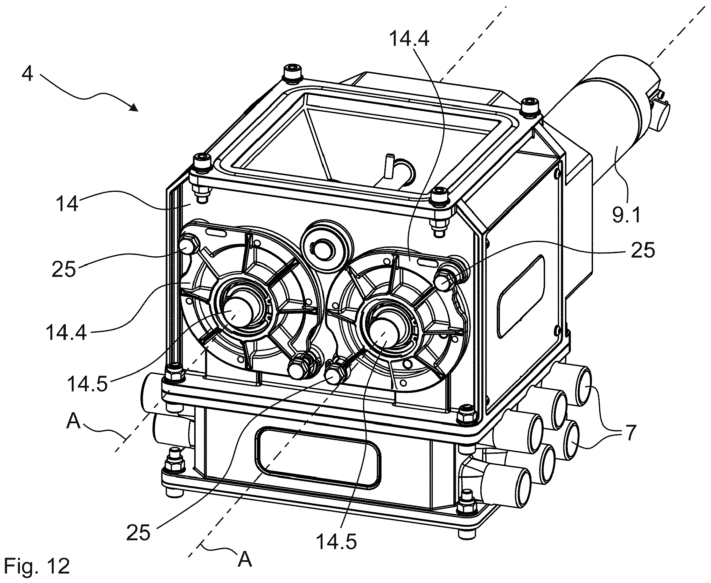

Anhand der Fig. 12 bis Fig. 15 werden im Folgenden die Verfahrensschritte zur Entnahme der Dosierwalzen 12 aus dem Doppeldosierermodul 4 beschrieben. Bei dem erfindungsgemäßen Doppeldosierermodul 4 sind diese Schritte auch in einer mit einem Vorratsbehälter 2 verbundenen und insbesondere in eine Maschine 1 integrierten Stellung möglich, so dass das Doppeldosierermodul 4 nicht zur Entnahme einzelner oder mehrerer Dosierwalzen 12 ausgebaut werden muss. Zu diesem Zwecke weist das Doppeldosierermodul 4 für jede Dosierwalze 12 eine Entnahmeöffnung 14.7 auf, durch welche die Dosierwalze 12 entlang ihrer Drehachse A aus dem Gehäuse 14 entnommen werden kann. Die Entnahmeöffnungen 14.7 der beiden Dosierwalzen 12 sind nebeneinander und auf derselben Seite des Gehäuses 14 angeordnet. Die Entnahmeöffnungen 14.7 liegen dabei auf den dem Getriebe 17 und dem Dosierantrieb 9.1 diametral gegenüberliegenden Seiten des Gehäuses 14.

Im Betriebszustand des Doppeldosierermoduls 4 sind die Entnahmeöffnungen 14.7 jeweils durch einen Verschlussflansch 14.4 verschlossen. Der Verschlussflansch 14.4 verhindert dabei, dass die Dosierwalzen 12 unbeabsichtigt während des Betriebs aus dem Gehäuse 14 austreten sowie dass externe Störeinflüsse und Verunreinigungen durch die Entnahmeöffnung 14.7 in das Innere des Doppeldosierermoduls 4 eintreten können.

Zusätzlich zu dieser Verschlussfunktion weisen die Verschlussflansche 14.4 jeweils ein Lager 14.5 für die Antriebswelle 16 auf. Durch die Bereitstellung dieses zusätzlichen Lagers 14.5 kann die Antriebswelle 16 nicht nur seitens des Getriebes 17, sondern auch in dem Verschlussflansch 14.4, welcher an dem Gehäuse 14 angeordnet ist, gelagert werden. Die Laufruhe der Antriebswelle 16 und damit der Dosierwalze 12 wird auf diese Weise verbessert und die mechanische Belastung reduziert.

Die eine scheibenähnliche Geometrie aufweisenden Verschlussflansche 14.4 weisen zwei diametral zueinander angeordnete und sich im montierten Zustand radial von der Antriebsachse A wegerstreckende Drehanschläge 14.9 auf. Im montierten Zustand liegen diese jeweils eine geöffnete kreisförmige Ausnehmung aufweisenden Drehanschläge 14.9 an Arretiermitteln 25 an. Durch das Zusammenwirken der Drehanschläge 14.9 und der Arretiermittel 25 wird dabei nicht nur eine Endposition beim Eindrehen der Verschlussflansche 14.4 in das Gehäuse 14 bereitgestellt. Vielmehr sind die Arretiermittel 25 als in das Gehäuse 14 hinein- und herausdrehbare Schrauben ausgestaltet, welche angezogen werden können, sobald der Verschlussflansch 14.4 seine in Fig. 12 gezeigte Endposition erreicht hat. Durch dieses Anziehen der Arretiermittel 25 werden die Drehanschläge 14.9 zwischen dem Arretiermittel 25 und dem Gehäuse 14 derart eingeklemmt, dass sich der Verschlussflansch 14.4 nicht mehr ungewollt von dem Gehäuse 14 löst.

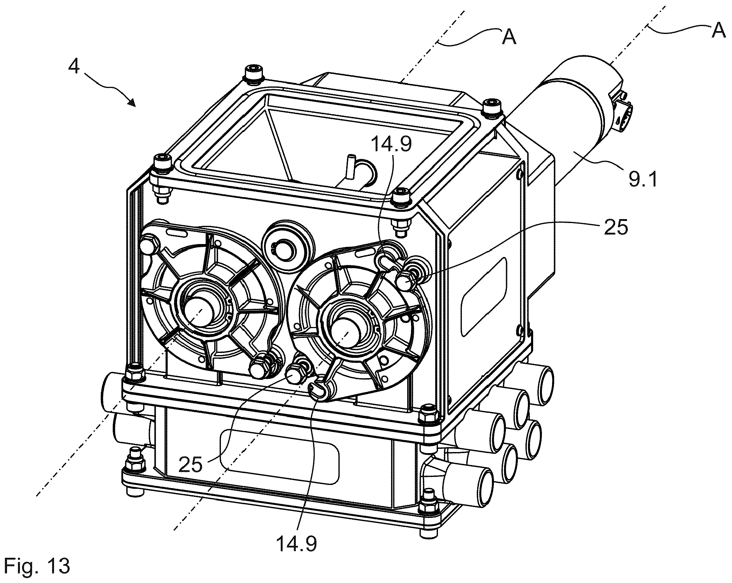

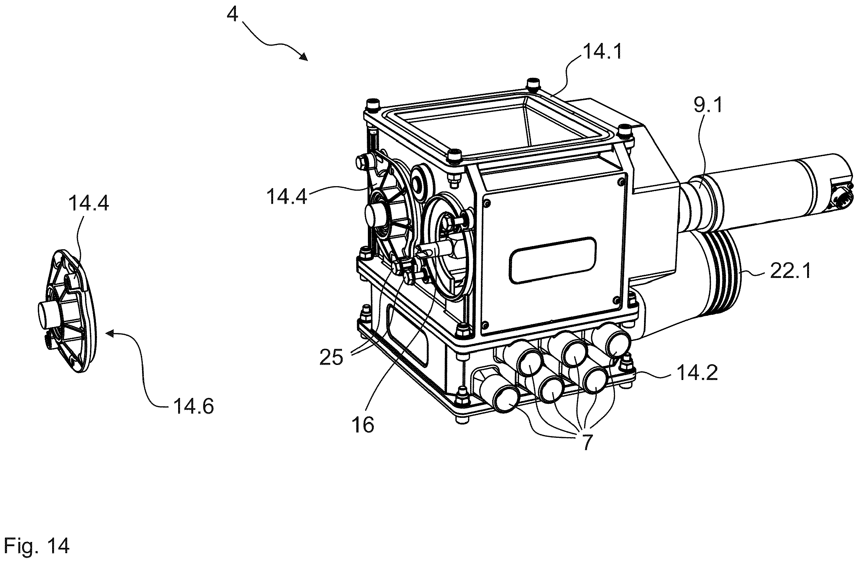

Wie ein Verschlussflansch 14.4 beabsichtigt vom Gehäuse 14 gelöst werden kann, so dass die Entnahmeöffnung 14.7 freigegeben wird, lässt sich anhand der Fig. 12 bis Fig. 14 erläutern. Ausgehend von dem in Fig. 14 gezeigten Zustand, in welchem beide Verschlussflansche 14.4 am Gehäuse 14 befestigt sind, werden zunächst die Arretiermittel 25 des rechts dargestellten Verschlussflansches 14.4 gelöst, so dass der Verschlussflansch 14.4 entgegen dem Uhrzeigersinn um die Drehachse A in die in Fig. 13 gezeigte Position gedreht werden kann. In dieser Position hintergreifen die beiden Drehanschläge 14.9 dieses Verschlussflansches 14.4 nicht mehr die ihnen jeweils zugeordneten Arretiermittel 25. Der Verschlussflansch 14.4 kann nunmehr entlang der Drehachse A von dem Gehäuse 14 abgezogen und in die in Fig. 14 gezeigte Position überführt werden.

Während die Drehanschläge 14.9 in erster Linie der Sicherung des Verschlussflansches 14.4 gegen ein unbeabsichtigtes Lösen vom Gehäuse 14 dienen, lässt sich in Fig. 14 zusätzlich der Bajonett-Verschluss 14.6 des Verschlussflansches 14.4 erkennen, welcher in die Innenkontur der Entnahmeöffnung 14.7 eingreift und durch das Verdrehen im Uhrzeigersinn während der Montage diese Kontur zur Befestigung des Verschlussflansches 14.4 an dem Gehäuse 14 hintergreift.

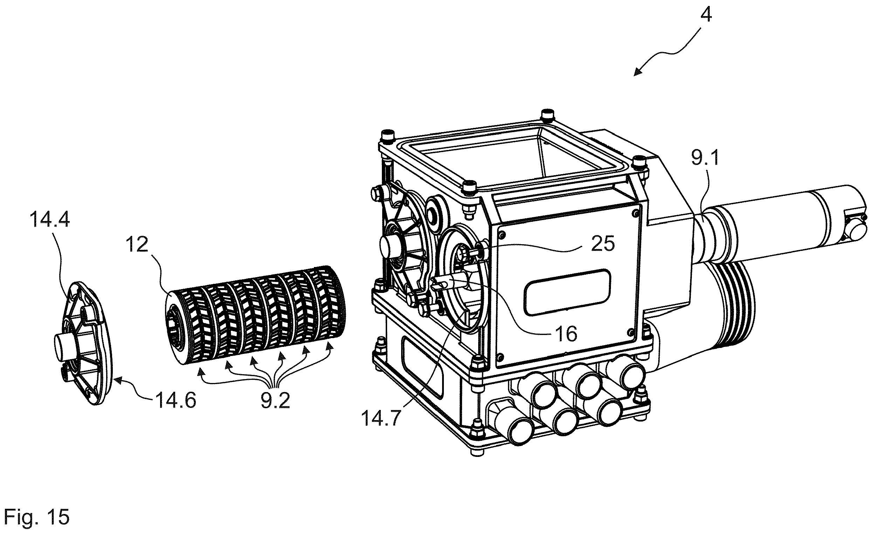

Durch die in Fig. 14 freigegebene Entnahmeöffnung 14.7 kann nunmehr die Dosierwalze 12 entlang der Drehachse A aus dem Gehäuse 14 herausgezogen werden, wie dies in Fig. 15 gezeigt ist.

In Fig. 14 und Fig. 15 ist zudem die Antriebswelle 16 der Dosierwalze 12 zu erkennen. Diese Antriebswelle 16 weist im Endbereich einen zylinderförmigen Abschnitt auf, welcher in das Lager 14.5 des Verschlussflansches 14.4 eintreten kann, so dass die Antriebswelle 16 über diesen Bereich im Lager 14.5 drehbeweglich gelagert ist.

An diesem zylinderförmigen Bereich schließt sich ein Bereich mit viereckigem Querschnitt an. Im Betriebszustand des Doppeldosierermoduls 4 greift dieser Bereich mit viereckigem Querschnitt in die Dosierwalze 12 ein, welche zu diesem Zwecke eine entlang ihrer Längsachse verlaufende Durchgangsöffnung mit viereckigem Querschnitt aufweist, welche an dem viereckigen Bereich der Antriebswelle 16 anliegt. Durch diese viereckige Ausgestaltung sowohl des Bereichs der Antriebswelle 16 als auch der Durchgangsöffnung der Dosierwalze 12 kann eine Drehbewegung der Antriebswelle 16 auf die in Umfangsrichtung formschlüssig mit ihr gekoppelte Dosierwalze 12 übertragen werden. Das Auftreten eines Schlupfes kann auf diese Weise verhindert werden.

Mit Hilfe des vorstehend beschriebenen Doppeldosierermoduls 4 sowie der Maschine 1 ist es möglich, eine kompakte Ausgestaltung zu erzielen und die Austauschbarkeit der Dosierwalzen zu vereinfachen.

### Bezugszeichenliste

- 1: Maschine
- 2: Vorratsbehälter
- 3: Säeinheit
- 3.1: Säschar
- 4: Doppeldosierermodul
- 6: Injektor
- 7: Abgang
- 8: Saatguteintrittsbereich
- 9: Saatgutdosierer
- 9.1: Dosierantrieb
- 9.2: Dosierabschnitt
- 9.3: Dosierkammer
- 9.4: Dosierlippe
- 9.5: Trennblech
- 10: Luftstromerzeugung
- 11: Dosiereinheit
- 12: Dosierwalze
- 13: Zugmaschine
- 14: Gehäuse
- 14.1: erstes Teilgehäuse
- 14.2: zweites Teilgehäuse
- 14.3: Nut
- 14.4: Verschlussflansch
- 14.5: Lager
- 14.6: Bajonett-Verschluss
- 14.7: Entnahmeöffnung
- 14.8: Steg
- 14.9: Drehanschlag
- 15: Rührwelle
- 16: Antriebswelle
- 17: Getriebe
- 18: Zahnrad
- 19: Zahnrad
- 20: Dosierlippen-Streifen
- 21: Trägerelement
- 21.1: Nut
- 22: Luftverteilereinheit
- 22.1: Zuluftanschluss
- 22.2: Luftverteilerkammer
- 22.3: Zuführung
- 23: Befestigungsmittel
- 24: Befestigungsmittel
- 25: Arretiermittel

- A: Drehachse
- D: Dosierbereich
- G: Längsachse
- I: Injektionsbereich
- L: Luftstrom
- Ls: Saatgutluftstrom
- Lz: Zuluftstrom
- M: Längsmittelebene
- N: Nutzfläche
- Q: Querachse
- S: Saatgut
- V: Vertikalachse

## Patentansprüche

1. Doppeldosierermodul zur Dosierung von Saatgut (S) vor dem Ausbringen auf einer landwirtschaftlichen Nutzfläche (N) mit
- einem Saatguteintrittsbereich (8), über welchen das Saatgut (S) in das Doppeldosierermodul (4) eintreten kann,
- mindestens zwei parallel zueinander angeordnete Dosierwalzen (12) mit jeweils mehreren auf deren Drehachsen (A) axial nebeneinander angeordneten Dosierabschnitten (9.2),
- Dosiereinheiten (11) zur Dosierung des Saatguts (S), die jeweils zwei Saatgutdosierer (9) mit jeweils einem drehbar angetriebenen Dosierabschnitt (9.2) aufweisen,
- Injektoren (6), über welche das Saatgut (S) zur Erzeugung von Saatgutluftströmen (Ls) aus den Saatgutdosierern (9) in durch die Injektoren (6) geführte Luftströme (L) einbringbar ist, und
- Abgängen (7), durch welche die Saatgutluftströme (Ls) aus dem Doppeldosierermodul (4) austreten können.

2. Doppeldosierermodul nach Anspruch 1, **dadurch gekennzeichnet, dass** injektorseitig der Dosierwalzen (12), insbesondere austauschbare, Trennbleche (9.5) zur Trennung der Dosiereinheiten (11) angeordnet sind.

3. Doppeldosierermodul nach einem der vorhergehenden Ansprüche, **dadurch gekennzeichnet, dass** entlang der Längsachse (G) des Doppeldosierermoduls (4) nebeneinander liegende Abgänge (7) und/oder Injektoren (6) entlang der Vertikalachse (V) unterschiedliche Abstände zu den Dosierwalzen (12) aufweisen, insbesondere sind sie zickzack-artig angeordnet.

4. Doppeldosierermodul nach einem der vorhergehenden Ansprüche, **dadurch gekennzeichnet, dass** zwei Abgänge (7) je Dosiereinheit (11) entlang der Vertikalachse (V) unterschiedliche Abstände zu den ihnen zugeordneten Dosierabschnitten (9.2) aufweisen.

5. Doppeldosierermodul nach einem der vorhergehenden Ansprüche, **gekennzeichnet durch** eine Luftverteilereinheit (22) zur Verteilung eines einströmenden Zuluftstroms (Lz) auf die Injektoren (6).

6. Doppeldosierermodul nach Anspruch 5, **gekennzeichnet durch** eine zentrale Luftverteilerkammer (22.2) zur Aufnahme des Zuluftstroms (Lz) und Zuführungen (22.3) zur Führung einzelner Luftströme (L) zu den Injektoren (6).

7. Doppeldosierermodul nach einem der vorhergehenden Ansprüche, **gekennzeichnet durch** Entnahmeöffnungen (14.7) zur axialen Entnahme der Dosierwalzen (12).

8. Doppeldosierermodul nach Anspruch 7, **gekennzeichnet durch** einen, insbesondere ein Lager (14.5) für eine Antriebwelle (16) aufweisenden, Verschlussflansch (14.4) zum Verschließen einer der Entnahmeöffnung (14.7).

9. Doppeldosierermodul nach Anspruch 8, **dadurch gekennzeichnet, dass** der Verschlussflansch (14.4) über einen Bajonett-Verschluss (14.6) an der Entnahmeöffnung befestigbar ist.

10. Doppeldosierermodul nach einem der vorhergehenden Ansprüche, **gekennzeichnet durch** einen Dosierantrieb (9.1) zum Antrieb der Dosierabschnitte (9.2).

11. Doppeldosierermodul nach Anspruch 10, **dadurch gekennzeichnet, dass** der Dosierantrieb (9.1) mit den Dosierwalzen (12), insbesondere mit den Dosierwalzen (12) und einer Rührwelle (15), über ein Getriebe (17) gekoppelt ist.

12. Doppeldosierermodul nach einem der vorhergehenden Ansprüche, **dadurch gekennzeichnet, dass** an den Dosierabschnitten (9.2) der Dosiereinheiten (11) zur Dosierung des Saatguts (S) Dosierlippen (9.4) anliegen.

13. Doppeldosierermodul nach Anspruch 12, **dadurch gekennzeichnet, dass** mehrere Dosierlippen (9.4), welche insbesondere an axial nebeneinander angeordneten Dosierabschnitten (9.2) einer Dosierwalze (12) anliegen, als ein zusammenhängender, insbesondere geschlitzter, Dosierlippen-Streifen (20) ausgestaltet sind.

14. Maschine zum Ausbringen von Saatgut (S) auf einer landwirtschaftlichen Nutzfläche (N), mit einem Vorratsbehälter (2) zur Aufnahme des Saatguts (S), einem mit dem Vorratsbehälter (2) verbundenen Doppeldosierermodul (4) nach Anspruch 1 und einer von dem Doppeldosierermodul (4) über Saatgutluftströme (Ls) mit Saatgut (S) versorgbaren Säeinheit (3) zur Aussaat des Saatguts (S).

15. Maschine nach Anspruch 14, **gekennzeichnet durch** eine zentrale Luftstromerzeugung (10) zur Erzeugung des Luftstroms (L).
